# EUROPEAN PATENT APPLICATION

(11) **EP 4 694 514 A1**
(43) Date of publication of application: **11.02.2026**
(21) Application number: 24795728.5
(22) Date of filing: 25.03.2024
(51) Int. Cl.: H04W 72/542, H04W 24/00

(54) **COMMUNICATION METHOD AND APPARATUS**

(30) Priority: 26.04.2023 CN 202310476743
(71) Applicant: Huawei Technologies Co., Ltd., Shenzhen, Guangdong 518129 (CN)
(72) Inventor: XIE, Xinqian, Shenzhen, Guangdong 518129 (CN); SHAO, Jiafeng, Shenzhen, Guangdong 518129 (CN)
(74) Representative: Gill Jennings & Every LLP
(86) International application number: PCT/CN2024/083625
(87) International publication number: WO 2024/222345

(57) **Abstract**

Embodiments of this application relate to the field of communication technologies, and provide a communication method and apparatus, to reduce a sensing performance loss caused by filtering introduced by a receive-end device. In the method, a first communication apparatus determines [*d*(*h*)] based on [*a*(*h*)]*,* generates a first signal based on [*d*(*h*)], and sends the first signal, where an element in [*a*(*h*)] satisfies a first feature or satisfies a second feature, where the first feature is: when *h* is less than *k, a*(*h*) is less than *a*(*h +* 1), or when *h* is greater than *k, a*(*h*) is less than or equal to *a*(*h* - 1); and the second feature is: when *h* is less than *k, a*(*h*) is greater than *a*(*h +* 1), or when *h* is greater than *k, a*(*h*) is greater than or equal to *a*(*h* - 1).

## Description

### CROSS-REFERENCE TO RELATED APPLICATIONS

This application claims priority to Chinese Patent Application No. 202310476743.5, filed with the China National Intellectual Property Administration on April 26, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In the evolution process from a 5th generation (5th generation, 5G) mobile communication system to a 5G-advanced (5G-advanced, 5G-A) technology, a communication sensing technology is considered as one of key technologies that can extend service capabilities of mobile communication networks. The core idea of the communication sensing technology is adding sensing capabilities to the mobile communication networks, thereby enabling capabilities such as target detection, tracking, and imaging. This allows the fusion of both communication and sensing within a single network, achieving harmonious coexistence and mutual benefit. The principle of the sensing technology is that a transmit-end device sends radio waves (namely, sensing signals) in a specific direction. When these radio waves are irradiated on a surface of a target, they generate reflected waves (namely, echo signals of the sensing signals). A receive-end device then receives and processes the reflected waves, to obtain sensing data such as information about position, speed, or type of the target.

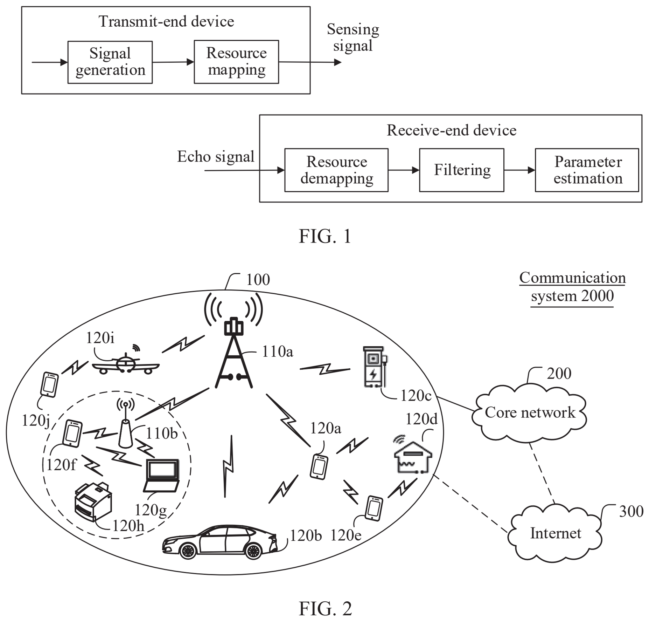

Currently, after generating the sensing signals, the transmit-end device transmits the sensing signals over specific resources. After performing resource demapping on the received echo signals, the receive-end device filters the echo signals, and performs processing such as parameter estimation on filtered echo signals to obtain the sensing data, as shown in FIG. 1. Although filtering at the receive-end device can reduce a false alarm rate in target detection, it is not conducive to obtaining accurate sensing data.

### SUMMARY

Embodiments of this application provide a communication method and apparatus, to reduce a sensing performance loss caused by filtering introduced by a receive-end device.

According to a first aspect, this application provides a communication method. The method may be performed by a first communication apparatus, or may be performed by a component in the first communication apparatus. This is not limited. The first communication apparatus may be a network device or a terminal device. This is not limited. In the method, the first communication apparatus determines a second symbol based on a first coefficient, where the first coefficient is used to process the second symbol; and generates a first signal based on the second symbol, and sends the first signal. Alternatively, in the method, the first communication apparatus generates a first signal based on a second symbol, and sends the first signal, where the second symbol is determined based on a first coefficient.

Optionally, the first signal may be a sensing signal. In other words, the method provided in this embodiment of this application may be applied to a sensing scenario. This is not limited.

In this embodiment of this application, a transmit-end device processes a to-be-sent symbol based on the first coefficient, so that a receive-end device can perform matched filtering on a received signal based on the first coefficient when filtering the received signal. In comparison with a case in which the transmit-end device does not process the to-be-sent symbol and the receive-end device filters the received signal, a performance loss in a subsequent signal processing process caused by the filtering introduced by the receive-end device can be reduced. For example, in the sensing scenario, in this embodiment of this application, the sensing performance loss caused by the filtering introduced by the receive end can be reduced, and sensing performance can be improved.

In a possible design, the first coefficient may be [*a*(*h*)], and the second symbol may be [*d*(*h*)]*.* Both [*a*(*h*)] and [*d*(*h*)] include H elements, *h* belongs to {1, ..., H}, and H is a positive integer.

In an optional implementation based on the foregoing design, an element in [*a*(*h*)] may satisfy a first feature, or may satisfy a second feature. The first feature may be: When *h* is less than *k, a*(*h*) is less than *a*(*h* + 1), or when *h* is greater than *k, a*(*h*) is less than or equal to *a*(*h* - 1). The second feature may be: When *h* is less than *k, a*(*h*) is greater than *a*(*h +* 1), or when *h* is greater than *k, a*(*h*) is greater than or equal to *a*(*h* - 1). *k* is a positive integer greater than 1 and less than H. In this implementation, a processing coefficient of the transmit-end device for a sent symbol can be flexibly adjusted, to satisfy sensing requirements in different scenarios. For example, a low false alarm rate can be obtained when the first coefficient satisfies the first feature, and high sensing precision can be obtained when the first coefficient satisfies the second feature. Optionally, when H is an odd number, *k* may be (H+1)/2; or when H is an even number, *k* may be H/2.

In an optional implementation based on the foregoing design, that the first communication apparatus determines the second symbol based on the first coefficient may be: The first communication apparatus determines [*d*(*h*)] based on [*a*(*h*)]*.* For example, the first communication apparatus processes [*c*(*h*)] based on [*a*(*h*)], to obtain [*d*(*h*)], where an element in [*d*(*h*)] is *d*(*h*)=*a*(*h*) × *c*(*h*). [*c*(*h*)] includes H elements.

In an optional implementation based on the foregoing design, the method may further include: The first communication apparatus receives first information, where the first information indicates [*a*(*h*)], so that the first communication apparatus may determine [*a*(*h*)] based on the first information; and/or the first communication apparatus may send first information, where the first information indicates [*a*(*h*)] , so that the receive-end device (for example, a second communication apparatus) may determine [a(h)] used by the first communication apparatus.

Optionally, the first information may indicate [*a*(*h*)] in the following manner: The first information includes a first field, and a state value of the first field indicates that the element in [*a*(*h*)] satisfies the first feature or satisfies the second feature.

In an optional implementation based on the foregoing design, the method may further include: The first communication apparatus may further receive an echo signal of the first signal; and process the echo signal of the first signal.

In an optional implementation based on the foregoing design, the first signal may be in a first time period, and the method may further include: The first communication apparatus determines [*f*(*h*)] based on [*e*(*h*)], where both [*e*(*h*)] and [*f*(*h*)] include H elements; and generates a second signal based on [*f*(*h*)], and sends the second signal in a second time period following the first time period. When the element in [*a*(*h*)] satisfies the first feature, an element in [*e*(*h*)] satisfies: When *h* is less than *k, e*(*h*) is less than *e*(*h +* 1), or when *h* is greater than *k, e*(*h*) is less than or equal to *e*(*h -* 1). Alternatively, when the element in [*a*(*h*)] satisfies the second feature, an element in [*e*(*h*)] satisfies: When *h* is less than *k, e*(*h*) is greater than *e*(*h +* 1), or when *h* is greater than *k, e*(*h*) is greater than or equal to *e*(*h -* 1). In this implementation, the receive-end device may perform joint processing on the echo signal of the first signal and an echo signal of the second signal, to improve the sensing performance.

Optionally, the first communication apparatus may further receive the echo signal of the first signal and the echo signal of the second signal; and process the echo signal of the first signal and the echo signal of the second signal, so that the first communication apparatus may perform joint processing on the echo signal of the first signal and the echo signal of the second signal, to improve the sensing performance.

In another possible design, the first coefficient may include [*a*(*m*)] and/or [*b*(*n*)], and the second symbol may be [*d*(*n*)(*m*)]. [*a*(*m*)] includes M elements, [*b*(*n*)] includes N elements, and [*d*(*n*)(*m*)] includes *N × M* elements. *m* belongs to {1, ..., M}, and *n* belongs to {1, ..., N}. Both M and N are positive integers.

In an optional implementation based on the foregoing design, an element in [*a*(*m*)] may satisfy a third feature, or may satisfy a fourth feature. The third feature may be: When *m* is less than *i*, *a*(*m*) is less than *a*(*m* + 1), or when *m* is greater than *i, a*(*m*) is less than or equal to *a*(*m* - 1). The fourth feature may be: When *m* is less than *i, a*(*m*) is greater than *a*(*m* + 1), or when *m* is greater than *i*, *a*(*m*) is greater than or equal to *a*(*m* - 1). *i* is a positive integer greater than 1 and less than M.

Optionally, when M is an odd number, *i* may be (M+1)/2; or when M is an even number, *i* may be M/2.

In an optional implementation based on the foregoing design, an element in [*b*(*n*)] may satisfy a fifth feature, or may satisfy a sixth feature. The fifth feature may be: When *n* is less than *j, b*(*n*) is less than *b*(*n* + 1), or when *n* is greater than *j, b*(*n*) is less than or equal to *b*(*n* - 1). The sixth feature may be: When *n* is less than *j, b*(*n*) is greater than *b*(*n* + 1), or when *n* is greater than *j, b*(*n*) is greater than or equal to *b*(*n -* 1). *j* is a positive integer greater than 1 and less than N.

Optionally, when N is an odd number, *j* may be (N+1)/2; or when N is an even number, *j* may be N/2.

In an optional implementation based on the foregoing design, that the first communication apparatus determines the second symbol based on the first coefficient may be: The first communication apparatus determines [*d*(*n*)(*m*)] based on [*a*(*m*)]. For example, the first communication apparatus processes [*c*(*n*)(*m*)] based on [*a*(*m*)], to obtain [*d*(*n*)(*m*)], where an element in [*d*(*n*)(*m*)] is *d*(*n*)(*m*)=*a*(*m*) × *c*(*n*)(*m*).

Alternatively, that the first communication apparatus determines the second symbol based on the first coefficient may be: The first communication apparatus determines [*d*(*n*)(*m*)] based on [*b*(*n*)]*.* For example, the first communication apparatus processes [*c*(*n*)(*m*)] based on [*b*(*n*)], to obtain [*d*(*n*)(*m*)], where an element in [*d*(*n*)(*m*)] is *d*(*n*)(*m*)=*b*(*n*) × *c*(*n*)(*m*).

Alternatively, that the first communication apparatus determines the second symbol based on the first coefficient may be: The first communication apparatus determines [*d*(*n*)(*m*)] based on [*a*(*m*)] and [*b*(*n*)]. For example, the first communication apparatus processes [*c*(*n*)(*m*)] based on [*a*(*m*)] and [*b*(*n*)], to obtain [*d*(*n*)(*m*)]*,* where an element in [*d*(*n*)(*m*)] is *d*(*n*)(*m*)=*a*(*m*) × *b*(*n*) × *c*(*n*)(*m*)*.*

[*c*(*n*)(*m*)] includes *N* × *M* elements.

In an optional implementation based on the foregoing design, the method may further include: The first communication apparatus receives first information, where the first information indicates [*a*(*m*)] and/or [*b*(*n*)], so that the first communication apparatus may determine the first coefficient based on the first information; or the first communication apparatus may send first information, where the first information indicates [*a*(*m*)] and/or [*b*(*n*)], so that the receive-end device (for example, a second communication apparatus) may determine the first coefficient used by the first communication apparatus.

Optionally, the first information may indicate [*a*(*m*)] and/or [*b*(*n*)] in the following manner: The first information includes a second field and/or a third field, a state value of the second field indicates that the element in [*a*(*m*)] satisfies the third feature or satisfies the fourth feature, and a state value of the third field indicates that the element in [*b*(*n*)] satisfies the fifth feature or satisfies the sixth feature.

In an optional implementation based on the foregoing design, the first signal may be in a first time period, and the method may further include: The first communication apparatus determines [*f*(*n*)*(m*)] based on [*e*(*m*)], where [*e*(*m*)] includes M elements, and [*f*(*n*)(*m*)] includes *N* × *M* elements; and generates a second signal based on [*f*(*n*)*(m*)], and sends the second signal in a second time period following the first time period. When the element in [*a*(*m*)] satisfies the third feature, an element in [*e*(*m*)] satisfies: When *m* is less than *i*, *e*(*m*) is less than *e*(*m* + 1), or when *m* is greater than *i, e*(*m*) is less than or equal to *e*(*m* - 1). Alternatively, when the element in [*a*(*m*)] satisfies the fourth feature, an element in [*e*(*m*)] satisfies: When *m* is less than *i, e*(*m*) is greater than *e*(*m* + 1), or when *m* is greater than *i*, *e*(*m*) is greater than or equal to *e*(*m* - 1).

Optionally, the first communication apparatus may further receive an echo signal of the first signal and an echo signal of the second signal, and process the echo signal of the first signal and the echo signal of the second signal.

According to a second aspect, this application provides another communication method. The method may be performed by a second communication apparatus, or may be performed by a component in the second communication apparatus. This is not limited. The second communication apparatus may be a network device or a terminal device. This is not limited. In the method, the second communication apparatus receives an echo signal of a first signal, and processes the echo signal of the first signal, where the first signal is a signal generated based on a second symbol, and the second symbol is a symbol determined based on a first coefficient. Alternatively, in the method, the second communication apparatus processes an echo signal of a first signal, where the first signal is a signal generated based on a second symbol, and the second symbol is a symbol determined based on a first coefficient.

In a possible design, the first coefficient may be [*a*(*h*)], and the second symbol may be [*d*(*h*)]*.* Both [*a*(*h*)] and [*d*(*h*)] include H elements, *h* belongs to {1, ..., H}, and H is a positive integer. Correspondingly, the first signal may be a signal generated based on [*d*(*h*)], and [*d*(*h*)] is a symbol determined based on [*a*(*h*)]*.*

In an optional implementation based on the foregoing design, an element in [*a*(*h*)] may satisfy a first feature, or may satisfy a second feature. The first feature may be: When *h* is less than *k, a*(*h*) is less than *a*(*h* + 1), or when *h* is greater than *k, a*(*h*) is less than or equal to *a*(*h* - 1). The second feature may be: When *h* is less than *k, a*(*h*) is greater than *a*(*h +* 1), or when *h* is greater than *k, a*(*h*) is greater than or equal to *a*(*h* - 1). *k* is a positive integer greater than 1 and less than H.

Optionally, when H is an odd number, *k* may be (H+1)/2; or when H is an even number, *k* may be H/2.

In an optional implementation based on the foregoing design, [*d*(*h*)] may be a symbol obtained by processing [*c*(*h*)] based on [*a*(*h*)], where an element in [*d*(*h*)] is *d*(*h*)=*a*(*h*) × *c*(*h*). [*c*(*h*)] includes H elements.

In an optional implementation based on the foregoing design, the method may further include: The second communication apparatus receives first information, where the first information indicates [*a*(*h*)], and determines [*a*(*h*)] based on the first information; and/or the second communication apparatus may send first information, where the first information indicates [*a*(*h*)]*.*

Optionally, the first information may indicate [*a*(*h*)] in the following manner: The first information includes a first field, and a state value of the first field indicates that the element in [*a*(*h*)] satisfies the first feature or satisfies the second feature.

In an optional implementation based on the foregoing design, the first signal may be in a first time period, and the method may further include: The second communication apparatus receives an echo signal of a second signal, where the second signal is in a second time period following the first time period, the second signal is generated based on [*f*(*h*)], an element in [*f*(*h*)] is *f*(*h*)=*e*(*h*) × *g*(*h*), *e*(*h*) belongs to *[e*(*h)*], *g*(*h*) belongs to [*g*(*h*)], and [*e*(*h*)], [*g*(*h*)], and [*f*(*h*)] each include H elements. Further, that the second communication apparatus processes the echo signal of the first signal may be: The second communication apparatus processes the echo signal of the first signal and the echo signal of the second signal. When the element in [*a*(*h*)] satisfies the first feature, an element in [*e*(*h*)] satisfies: When *h* is less than *k, e*(*h*) is less than *e*(*h +* 1), or when *h* is greater than *k, e*(*h*) is less than or equal to *e*(*h -* 1). Alternatively, when the element in [*a*(*h*)] satisfies the second feature, an element in [e*(h*)] satisfies: When *h* is less than *k, e*(*h*) is greater than *e*(*h +* 1), or when *h* is greater than *k, e*(*h*) is greater than or equal to *e*(*h -* 1).

In another possible design, the first coefficient may include [*a*(*m*)] and/or [*b*(*n*)], and the second symbol may be [*d*(*n*)(*m*)]. [*a*(*m*)] includes M elements, [*b*(*n*)] includes N elements, and [*d*(*n*)(*m*)] includes *N* × *M* elements. *m* belongs to {1, ..., M}, and *n* belongs to {1, ..., N}. Both M and N are positive integers. Correspondingly, the first signal may be a signal generated based on [*d*(*n*)(*m*)], and [*d*(*n*)(*m*)] is a symbol determined based on [*a*(*m*)] and/or [*b*(*n*)].

In an optional implementation based on the foregoing design, an element in [*a*(*m*)] may satisfy a third feature, or may satisfy a fourth feature. The third feature may be: When *m* is less than *i*, *a*(*m*) is less than *a*(*m* + 1), or when *m* is greater than *i,* a(*m*) is less than or equal to *a*(*m* - 1). The fourth feature may be: When *m* is less than *i,* a(m) is greater than *a*(*m* + 1), or when m is greater than *i*, *a*(*m*) is greater than or equal to *a*(*m* - 1). *i* is a positive integer greater than 1 and less than M.

Optionally, when M is an odd number, *i* may be (M+1)/2; or when M is an even number, *i* may be M/2.

In an optional implementation based on the foregoing design, an element in [*b*(*n*)] may satisfy a fifth feature, or may satisfy a sixth feature. The fifth feature may be: When *n* is less than *j, b*(*n*) is less than *b*(*n* + 1), or when *n* is greater than *j, b*(*n*) is less than or equal to *b*(*n* - 1). The sixth feature may be: When *n* is less than *j, b*(*n*) is greater than *b*(*n* + 1), or when *n* is greater than *j, b*(*n*) is greater than or equal to *b*(*n* - 1). *j* is a positive integer greater than 1 and less than N.

Optionally, when N is an odd number, *j* may be (N+1)/2; or when N is an even number, *j* may be N/2.

In an optional implementation based on the foregoing design, [*d*(*n*)(*m*)] is a symbol determined based on [*a*(*m*)]. For example, [*d*(*n*)(*m*)] is a symbol obtained by processing [*c*(*n*)(*m*)] based on [*a*(*m*)], where an element in [*d*(*n*)(*m*)] is *d*(*n*)(*m*)=*a*(*m*) × *c*(*n*)(*m*).

Alternatively, [*d*(*n*)(*m*)] is a symbol determined based on [*b*(*n*)]. For example, [*d*(*n*)(*m*)] is a symbol obtained by processing [*c*(*n*)(*m*)] based on [*b*(*n*)], where an element in [*d*(*n*)(*m*)] is *d*(*n*)(*m*)=*b*(*n*) × *c*(*n*)(*m*).

Alternatively, [*d*(*n*)(*m*)] is a symbol determined based on [*a*(*m*)] and [*b*(*n*)]. For example, [*d*(*n*)(*m*)] is a symbol obtained by processing [*c*(*n*)(*m*)] based on [*a*(*m*)] and [*b*(*n*)], where an element in [*d*(*n*)(*m*)] is *d*(*n*)(*m*)=*a*(*m*) × *b*(*n*) × *c*(*n*)(*m*).

[*c*(*n*)(*m*)] includes *N* × *M* elements.

In an optional implementation based on the foregoing design, the method may further include: The second communication apparatus receives first information, where the first information indicates [*a*(*m*)], and determines [*a*(*m*)] based on the first information; the second communication apparatus receives first information, where the first information indicates [*b*(*n*)], and determines [*b*(n)] based on the first information; the second communication apparatus receives first information, where the first information indicates [*a*(*m*)] and [*b*(*n*)], and determines [*a*(*m*)] and [*b*(*n*)] based on the first information; or the second communication apparatus may send first information, where the first information indicates [*a*(*m*)] and/or [*b*(*n*)].

Optionally, the first information may indicate [*a*(*m*)] and/or [*b*(*n*)] in the following manner: The first information includes a second field and/or a third field, a state value of the second field indicates that the element in [*a*(*m*)] satisfies the third feature or satisfies the fourth feature, and a state value of the third field indicates that the element in [*b*(*n*)] satisfies the fifth feature or satisfies the sixth feature.

In an optional implementation based on the foregoing design, the first signal may be in a first time period, and the method may further include: The second communication apparatus receives an echo signal of a second signal, where the second signal is in a second time period following the first time period, the second signal is generated based on [*f*(*n*)*(m*)], an element *f*(*n*)(*m*) in [*f*(*n*)*(m*)] satisfies *e*(*m*) × *g*(*n*)(*m*) or satisfies *e*(*m*) × *q*(*n*)× *g*(*n*)(*m*)*, e*(*m*) belongs to [*e*(*m*)], *q*(*n*) belongs to [*q*(*n*)], *g*(*n*)(*m*) belongs to [*g*(*n*)(*m*)], [*e*(*m*)] includes M elements, [*q*(*n*)] includes N elements, and both [*f*(*n*)*(m*)] and [*g*(*n*)*(m*)] include *N* × *M* elements. Further, that the second communication apparatus processes the echo signal of the first signal may be: The second communication apparatus processes the echo signal of the first signal and the echo signal of the second signal. When the element in [*a*(*m*)] satisfies the third feature, an element in [*e*(*m*)] satisfies: When *m* is less than *i*, *e*(*m*) is less than *e*(*m* + 1), or when *m* is greater than *i, e*(*m*) is less than or equal to *e*(*m* - 1). Alternatively, when the element in [*a*(*m*)] satisfies the fourth feature, an element in [*e*(*m*)] satisfies: When *m* is less than *i, e*(*m*) is greater than *e*(*m* + 1), or when *m* is greater than *i, e*(*m*) is greater than or equal to *e*(*m* - 1).

According to a third aspect, an embodiment of this application provides a communication apparatus. The communication apparatus is configured to perform the method according to any one of the first aspect and the possible designs of the first aspect. The communication apparatus is, for example, a first communication apparatus, or a functional module in the first communication apparatus, for example, a baseband apparatus or a chip system.

In a possible design, the communication apparatus includes a baseband apparatus and a radio frequency apparatus.

In another possible design, the communication apparatus includes a processing module (sometimes also referred to as a processing unit) and a transceiver module (sometimes also referred to as a transceiver unit). The transceiver module can implement a sending function and a receiving function. When the transceiver module implements the sending function, the transceiver module may be referred to as a sending module (sometimes also referred to as a sending unit), and when the transceiver module implements the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a fourth aspect, an embodiment of this application provides a communication apparatus. The communication apparatus is configured to perform the method according to any one of the second aspect and the possible designs of the second aspect. The communication apparatus is, for example, a second communication apparatus, or a functional module in the second communication apparatus, for example, a baseband apparatus or a chip system.

In a possible design manner, the communication apparatus includes a baseband apparatus and a radio frequency apparatus.

In another possible design, the communication apparatus includes a processing module (sometimes also referred to as a processing unit) and a transceiver module (sometimes also referred to as a transceiver unit). The transceiver module can implement a sending function and a receiving function. When the transceiver module implements the sending function, the transceiver module may be referred to as a sending module (sometimes also referred to as a sending unit), and when the transceiver module implements the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a fifth aspect, an embodiment of this application further provides a communication apparatus. The communication apparatus may include one or more processors. Optionally, the communication apparatus may further include a memory. The memory is configured to store one or more computer programs or instructions. The one or more processors are configured to execute the one or more computer programs or instructions stored in the memory, to cause the communication apparatus to perform the method according to any one of the first aspect and the possible designs of the first aspect, or perform the method according to any one of the second aspect and the possible designs of the second aspect.

According to a sixth aspect, an embodiment of this application further provides a communication system. The communication system includes one or more of the following: the communication apparatus according to the third aspect or the communication apparatus according to the fourth aspect.

According to a seventh aspect, an embodiment of this application provides a computer-readable storage medium. The computer-readable storage medium is configured to store a computer program or instructions. When the computer program or the instructions are run, the method according to any one of the first aspect and the possible designs of the first aspect is implemented, or the method according to any one of the second aspect and the possible designs of the second aspect is implemented.

According to an eighth aspect, an embodiment of this application further provides a computer program product including instructions. When the computer program product runs on a computer, the method according to any one of the first aspect and the possible designs of the first aspect is implemented, or the method according to any one of the second aspect and the possible designs of the second aspect is implemented.

According to a ninth aspect, an embodiment of this application further provides a chip. The chip is coupled to a memory, and is configured to read and execute program instructions in the memory, to cause an apparatus in which the chip is located to implement the method according to any one of the first aspect and the possible designs of the first aspect, or implement the method according to any one of the second aspect and the possible designs of the second aspect.

For technical effects that can be achieved by any one of the second aspect to the ninth aspect and the possible design manners of the second aspect to the ninth aspect, correspondingly refer to technical effects that can be achieved by any one of the first aspect and the possible designs of the first aspect. Details are not described again.

### BRIEF DESCRIPTION OF DRAWINGS

FIG. 1 is a schematic flowchart of sensing signal processing;
FIG. 2 is a diagram of a network architecture of a communication system;
FIG. 3 is a diagram of a sensing scenario;
FIG. 4 is a schematic flowchart of a communication method according to an embodiment of this application;
FIG. 5 is a schematic flowchart of a communication method according to an embodiment of this application;
FIG. 6 is a schematic flowchart of another communication method according to an embodiment of this application;
FIG. 7 is a schematic flowchart of still another communication method according to an embodiment of this application;
FIG. 8 is a schematic flowchart of still another communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

To make objectives, technical solutions and advantages of embodiments of this application clearer, the following further describes embodiments of this application in detail with reference to the accompanying drawings.

A network architecture and a service scenario described in this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

In embodiments of this application, "a plurality of" may mean two or more. In view of this, "a plurality of" may also be understood as "at least two" in embodiments of this application. "At least one" may be understood as one or more, for example, one, two, or more. For example, "include at least one" means "include one, two, or more". For example, "include at least one of A, B, and C" may mean "include A, B, C, A and B, A and C, B and C, or A, B, and C". The term "and/or" describes an association relationship between associated objects. Specifically, three relationships may exist. For example, A and/or B may indicate the following three cases: Only A exists, both A and B exist, and only B exists. In addition, unless otherwise specified, the character "/" usually indicates an "or" relationship between the associated objects.

In addition, the terms "system" and "network" in embodiments of this application may be used interchangeably, and "according to" and "based on" may be used interchangeably.

Ordinal numbers such as "first" and "second" mentioned in embodiments of this application are usually used to distinguish between different objects, and are not used to limit an order, a time sequence, priorities, importance degrees, or the like of a plurality of objects. For example, "a first communication apparatus" and "a second communication apparatus" in embodiments of this application are used to distinguish between two communication apparatuses, and priorities, importance degrees, or the like of the two communication apparatuses are not limited.

Embodiments of this application are presented by describing a system that includes a plurality of devices, components, modules, and the like. It should be understood that the system may include another device, component, module, and the like that are not mentioned, or may include only a part of devices, components, modules, or the like mentioned in embodiments.

The following first describes a communication system to which embodiments of this application is applicable.

The technical solutions in embodiments of this application may be applied to various communication systems, for example, a universal mobile telecommunications system (universal mobile telecommunications system, UMTS), a wireless local area network (wireless local area network, WLAN), a short-distance wireless communication system (for example, a sidelink (sidelink) system, a wireless fidelity (wireless fidelity, Wi-Fi) system, and a Bluetooth system), a wired network, a vehicle-to-everything (vehicle-to-everything, V2X) communication system, a device-to-device (device-to-device, D2D) communication system, an internet of vehicles communication system, a 4th generation (4th generation, 4G) mobile communication system (for example, a long term evolution (long term evolution, LTE) system), an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system (for example, a new radio (new radio, NR) system), a future communication system (for example, a 6th generation (6th generation, 6G) mobile communication system), or another similar communication system. This is not limited. In embodiments of this application, a communication system shown in FIG. 2 is used as an example for description. When the technical solutions in embodiments of this application are applied to another communication system, a device, a component, a module, and the like in embodiments may be replaced with a corresponding device, component, and module in the another communication system. This is not limited.

FIG. 2 is a diagram of an architecture of a communication system to which an embodiment of this application is applied. As shown in FIG. 2, the communication system 2000 includes an access network 100 and a core network 200. Optionally, the communication system 2000 may further include an internet 300. The access network 100 may include at least one radio access network (radio access network, RAN) node, for example, 110a and 110b in FIG. 2, and may further include at least one terminal device, for example, 120a to 120j in FIG. 2. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle. A same terminal device or network device may provide different functions in different application scenarios. For example, mobile phones in FIG. 2 include 120a, 120e, 120f, and 120j. The mobile phone 120a may access the base station 110a, be connected to the vehicle 120b, directly communicate with the mobile phone 120e, and access the HAP. The vehicle 120b may access the HAP and directly communicate with the mobile phone 120a. The mobile phone 120f may access the micro base station 110b, be connected to the notebook computer 120g, and be connected to the printer 120h. The mobile phone 120j may control the uncrewed aerial vehicle 120i.

The network device is a network-side device having a wireless transceiver function. The network device may be an apparatus that is in a radio access network (radio access network, RAN) and that provides a wireless communication function for the terminal device, and is referred to as a RAN device. The RAN may be an access network in a 3rd generation partnership project (3rd generation partnership project, 3GPP), for example, a 4G network, a 5G network, or a future-oriented 6G network. Alternatively, the RAN may be an open access network (open RAN, O-RAN or ORAN), a cloud radio access network (cloud radio access network, CRAN), or a communication network of two or more of the foregoing networks.

Alternatively, the RAN device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a 6G mobile communication system, a base station in a future mobile communication system, an access node in a Wi-Fi system, or the like.

Alternatively, the RAN device may be a module or unit that implements a part of functions of a base station. For example, the RAN device may be a central unit (central unit, CU), a distributed unit (distributed unit, DU), or a radio unit (radio unit, RU). The CU herein implements functions of a radio resource control protocol and a packet data convergence protocol (packet data convergence protocol, PDCP) of the base station, and may further implement a function of a service data adaptation protocol (service data adaptation protocol, SDAP). The DU implements functions of a radio link control layer and a medium access control (medium access control, MAC) layer of the base station, and may further implement a part or all of functions of a physical layer. For specific descriptions of the foregoing protocol layers, refer to technical specifications related to the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may also have different names, but a person skilled in the art may understand meanings of the names. For example, in an ORAN system, the CU may also be referred to as an O-CU (open CU), the DU may also be referred to as an O-DU, and the RU may also be referred to as an O-RU. Any unit of the CU (or a CU-CP and a CU-UP), the DU, and the RU in this application may be implemented by using a software module, a hardware module, or a combination of a software module and a hardware module. The network device may be a macro base station (for example, 110a in FIG. 2), may be a micro base station or an indoor base station (for example, 110b in FIG. 2), or may be a relay node, a donor node, or the like. A specific technology and a specific device form that are used by the network device are not limited in embodiments of this application.

In embodiments of this application, a function of the network device may alternatively be performed by a module (for example, a chip) in the network device, or may be performed by a control subsystem that includes the function of the network device. The control subsystem including the function of the network device herein may be a control center in the foregoing application scenarios such as a smart grid, industrial control, smart transportation, and a smart city.

The terminal device is a user-side device having a wireless transceiver function. The terminal device may also be referred to as a terminal, user equipment (user equipment, UE), a mobile station, a mobile terminal, or the like. The terminal device may be widely used in various scenarios such as device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. In embodiments of this application, an apparatus configured to implement a function of the terminal device may be the terminal device, or may be an apparatus that can support the terminal device in implementing the function, for example, a chip system, or a combined device or component that can implement the function of the terminal device. The apparatus may be installed in the terminal device. A specific technology and a specific device form that are used by the terminal device are not limited in embodiments of this application.

In embodiments of this application, the function of the terminal device may alternatively be performed by a module (for example, a chip or a modem) in the terminal device, or may be performed by an apparatus including the function of the terminal device.

The network device and the terminal device may be at fixed positions, or may be movable. The network device and the terminal device may be deployed on land, including an indoor or outdoor device, a handheld device, or a vehicle-mounted device; may be deployed on water; or may be deployed on an airplane, a balloon, and a satellite in the air. Application scenarios of the network device and the terminal device are not limited in embodiments of this application.

Roles of the network device and the terminal device may be relative. For example, the helicopter or the uncrewed aerial vehicle 120i in FIG. 2 may be configured as a mobile network device. For the terminal device 120j that accesses the radio access network 100 through 120i, the terminal device 120i is a network device. However, for the network device 110a, 120i is a terminal device, that is, communication between 110a and 120i is performed by using a radio air interface protocol. It is clear that communication between 110a and 120i may alternatively be performed by using an interface protocol between network devices. In this case, for 110a, 120i is also a network device. Therefore, both the network device and the terminal device may be collectively referred to as communication apparatuses. 110a and 110b in FIG. 2 may be referred to as communication apparatuses having the function of the network device, and 120a to 120j in FIG. 2 may be referred to as communication apparatuses having the function of the terminal device.

Communication between the network device and the terminal device, between the network devices, and between the terminal devices may be performed over a licensed spectrum, may be performed over an unlicensed spectrum, or may be performed over both a licensed spectrum and an unlicensed spectrum. This is not limited.

In embodiments of this application, a transmit-end device is a transmit end of a sensing signal, and a receive-end device is a receive end of an echo signal of the sensing signal. It may be understood as that roles of the transmit-end device and the receive-end device are interchangeable. In other words, the transmit-end device also has a receiving capability, and the receive-end device also has a sending capability. For example, the transmit-end device may be the network device in FIG. 2, and the receive-end device may be the terminal device in FIG. 2. Alternatively, the transmit-end device may be the terminal device in FIG. 2, and the receive-end device may be the network device in FIG. 2. Alternatively, the transmit-end device and the receive-end device are the network device in FIG. 2. Alternatively, the transmit-end device and the receive-end device are the terminal device in FIG. 2. This is not limited.

The following describes technical features in embodiments of this application.

Sensing technologies usually may be classified into two types of modes: monostatic sensing and bi-static sensing.

The monostatic sensing mode means that the transmit-end device of the sensing signal and the receive-end device of the echo signal of the sensing signal are a same device. In other words, in the monostatic sensing mode, the transmit-end device needs to send the sensing signal and receive the echo signal obtained by reflecting the sensing signal on a target surface. Therefore, the monostatic sensing mode may also be referred to as a self-sending and self-receiving mode. This is not limited.

The bi-static sensing mode means that the transmit-end device of the sensing signal and the receive-end device of the echo signal of the sensing signal are two individual devices. In other words, a sensing station A sends the sensing signal, and the echo signal obtained by reflecting the sensing signal on the target surface is received by a sensing station B. Therefore, the bi-static sensing mode may also be referred to as an A-sending and B-receiving mode.

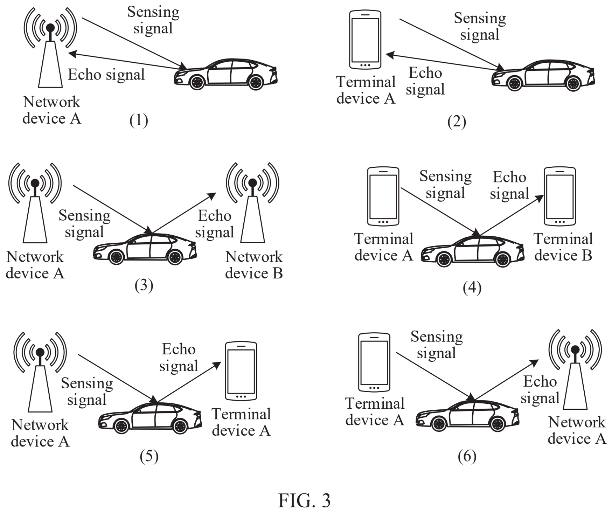

FIG. 3 is a diagram of a sensing scenario to which an embodiment of this application is applicable. FIG. 3 provides six sensing scenarios: a scenario in which a network device A performs self-sending and self-receiving, as shown in (1) in FIG. 3; a scenario in which a terminal device A performs self-sending and self-receiving, as shown in (2) in FIG. 3; a scenario in which a network device A sends a sensing signal and a network device B receives an echo signal, as shown in (3) in FIG. 3; a scenario in which a terminal device A sends a sensing signal and a terminal device B receives an echo signal, as shown in (4) in FIG. 3; a scenario in which a network device A sends a sensing signal and a terminal device A receives an echo signal, as shown in (5) in FIG. 3; and a scenario in which a terminal device A sends a sensing signal and a network device A receives an echo signal, as shown in (6) in FIG. 3.

It should be noted that, in FIG. 3, an example in which a sensing target is a vehicle is used. However, embodiments of this application are not limited thereto. For example, the sensing target may alternatively be a pedestrian, a low-altitude uncrewed aerial vehicle, or another moving or static object. In FIG. 3, an example in which a terminal device is a smartphone is used. Embodiments of this application are not limited thereto.

Currently, after generating a sensing signal, a transmit-end device includes the sensing signal in specific time and frequency domain resources for sending. After performing resource demapping on a received echo signal, a receive-end device filters the echo signal to reduce a false alarm rate of target detection, and performs processing such as parameter estimation on a filtered echo signal to obtain sensing data, as shown in FIG. 1. Although filtering of the receive-end device can reduce the false alarm rate, it is not conducive to obtaining accurate sensing data. For example, the filtering reduces a signal-to-noise ratio, and consequently, a target detection probability is reduced, target positioning accuracy is reduced, and the like, which causes a sensing performance loss.

In view of this, embodiments of this application provide a communication method and apparatus, to reduce the sensing performance loss caused by the filtering introduced by the receive-end device. The method may be applied to the communication system shown in FIG. 2 or FIG. 3, but is not limited thereto. The following first describes technical terms in embodiments of this application.

A first communication apparatus is configured to generate a sensing signal and send the sensing signal, and may be a network device or a component in the network device, or may be a terminal device or a component in the terminal device. This is not limited. For example, the first communication apparatus is the network device A shown in (3) in FIG. 3, the terminal device A shown in (4) in FIG. 3, the network device A shown in (5) in FIG. 3, or the terminal device A shown in (6) in FIG. 3. This is not limited. Optionally, the first communication apparatus may be further configured to receive an echo signal of the sensing signal. For example, the first communication apparatus is the network device A shown in (1) in FIG. 3, or the terminal device A shown in (2) in FIG. 3. This is not limited.

A second communication apparatus is configured to receive the echo signal of the sensing signal, and may be a network device or a component in the network device, or may be a terminal device or a component in the terminal device. This is not limited. For example, the second communication apparatus is the network device B shown in (3) in FIG. 3, the terminal device B shown in (4) in FIG. 3, the terminal device A shown in (5) in FIG. 3, or the network device A shown in (6) in FIG. 3. This is not limited.

A third communication apparatus is configured to configure a parameter, for example, configure a related parameter of a sensing service. This is not limited. The third communication apparatus may be a network device or a component in the network device, or may be a terminal device or a component in the terminal device. This is not limited. It should be noted that the third communication apparatus may be the same as or different from the first communication apparatus.

A symbol may also be referred to as a modulation symbol (modulation symbol), a symbol group, a modulation symbol sequence, a modulation symbol stream, a modulation symbol string, a modulation symbol set, or the like. This is not limited. The symbol in embodiments of this application may be represented as a complex number, including a real part and an imaginary part. This is not limited. In embodiments of this application, a modulation scheme of the symbol may be quadrature phase shift keying (quadrature phase shift keying, QPSK), binary phase shift keying (binary phase shift keying, BPSK), offset quadrature phase shift keying (offset phase shift keying, OQPSK), or the like.

A coefficient may also be referred to as a parameter, a factor, or the like. This is not limited. The coefficient in embodiments of this application may be represented as a real number, or may be represented as a complex number. This is not limited.

In embodiments of this application, a numbering manner in which numbers start with 1 and increase progressively by a step of 1 is used as an example, but this is not limited thereto. For example, the numbering manner may alternatively be that numbers start with 0 and increase progressively by the step of 1. For another example, the numbering manner may alternatively be that numbers start with X and decrease progressively by the step of 1, where X is an integer greater than 1.

" [·]" may be replaced with "{·}", represents a plurality of elements, and may be understood as a set, a group, a sequence, or the like. This is not limited.

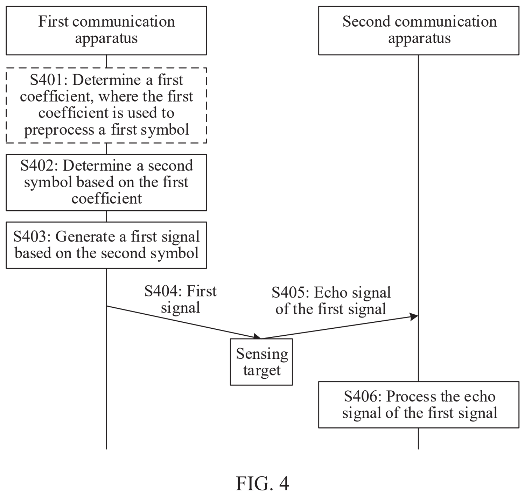

FIG. 4 is a schematic flowchart of a communication method according to an embodiment of this application. In this embodiment, a bi-static sensing mode is used as an example. As shown in FIG. 4, the method may include the following steps.

S401: A first communication apparatus determines a first coefficient.

S401 is an optional step, and is represented by a dashed line in FIG. 4. For example, the first communication apparatus may read the locally stored first coefficient, may determine (or obtain) the first coefficient based on a locally stored parameter (for example, a capability parameter), or may determine the first coefficient based on first information. The first information may indicate the first coefficient. For example, a third communication apparatus may send the first information to the first communication apparatus. Correspondingly, the first communication apparatus may receive the first information from the third communication apparatus. Optionally, the first information may be carried (or included) in downlink control information (downlink control information, DCI), may be carried in radio resource control (radio resource control, RRC) layer signaling, or may be carried in MAC layer signaling. This is not limited. It should be noted that a specific implementation process in which the first communication apparatus determines the first coefficient is not limited in embodiments of this application.

The first coefficient may be used to process a first symbol. For example, the first coefficient may be used to preprocess the first symbol.

It should be noted that, for technical terms in embodiments of this application, for example, the first communication apparatus, the third communication apparatus, the coefficient, and the symbol, refer to the foregoing content. Details are not described herein again.

The first symbol is a to-be-preprocessed symbol of the first communication apparatus. The first symbol may include H elements, and each element corresponds to one symbol. H is a positive integer. It may be understood that the first communication apparatus may generate a sensing signal based on the first symbol.

For example, the first symbol may be one symbol group, or may be N symbol groups, and each symbol group includes M symbols. This is not limited. Both M and N are positive integers, and *N* × *M* = H. The following describes the two cases.

Case 1: The first symbol is one symbol group, and is denoted as [*c*(*h*)]. [*c*(*h*)] includes H elements. *h* belongs to {1, ..., H}, that is, *h* ∈ {1, ..., H}. "..." in [1, ..., H] represents a positive integer between 1 and H. For example, when H=9, *h* ∈ {1, 2, 3, 4, 5, 6, 7, 8, 9}. The H elements in [*c*(*h*)] may be respectively *c*(1), ..., *c*(*H*)*.* In other words, an h^{th} symbol in [*c*(*h*)] may be *c*(*h*).

In Case 1, the first coefficient may be denoted as [*a*(*h*)]*.* [*a*(*h*)] includes H elements, and the H elements in [*a*(*h*)] may be respectively *a*(1), ..., *a*(*H*)*.* In other words, an h^{th} coefficient in [*a*(*h*)] is *a*(*h*)*.* For example, an element in [*a*(*h*)] may satisfy a first feature or satisfy a second feature.

In an example, the first feature may be: When *h* is less than *k, a*(*h*) is less than *a*(*h* + 1), or when *h* is greater than *k, a*(*h*) is less than or equal to *a*(*h* - 1). The second feature may be: When *h* is less than *k, a*(*h*) is greater than *a*(*h* + 1), or when *h* is greater than *k, a*(*h*) is greater than or equal to *a*(*h -* 1). For example, H is an odd number, and the first feature is: When *h* is less than *k, a*(*h*) is less than *a*(*h +* 1), or when *h* is greater than *k, a*(*h*) is less than *a*(*h -* 1). The second feature is: When *h* is less than *k, a*(*h*) is greater than *a*(*h +* 1), or when *h* is greater than *k, a*(*h*) is greater than *a*(*h -* 1). For another example, H is an even number, and the first feature is: When *h* is less than *k, a*(*h*) is less than *a*(*h* + 1), or when *h* is greater than *k, a*(*h*) is less than or equal to *a*(*h* - 1). The second feature is: When *h* is less than *k, a*(*h*) is greater than *a*(*h +* 1), or when *h* is greater than *k, a*(*h*) is greater than or equal to *a*(*h -* 1).

*k* is a positive integer greater than 1 and less than H. Optionally, when H is an odd number, *k* is (H+1)/2; or when H is an even number, *k* is H/2.

For example, H is 23, and *k* is 12. If the element in [*a*(*h*)] satisfies the first feature, the 23 elements in [*a*(*h*)] may be [0.3, 0.35, 0.4, 0.45, 0.5, 0.55, 0.6, 0.65, 0.7, 0.75, 0.8, 0.9, 0.8, 0.75, 0.7, 0.65, 0.6, 0.55, 0.5, 0.45, 0.4, 0.35, 0.3]. If the element in [*a*(*h*)] satisfies the second feature, the 23 elements in [*a*(*h*)] may be [0.9, 0.8, 0.75, 0.7, 0.65, 0.6, 0.55, 0.5, 0.45, 0.4, 0.35, 0.3, 0.35, 0.4, 0.45, 0.5, 0.55, 0.6, 0.65, 0.7, 0.75, 0.8, 0.9].

For example, H is 24, and *k* is 12. If the element in [*a*(*h*)] satisfies the first feature, the 24 elements in [*a*(*h*)] may be [0.3, 0.35, 0.4, 0.45, 0.5, 0.55, 0.6, 0.65, 0.7, 0.75, 0.8, 0.9, 0.9, 0.8, 0.75, 0.7, 0.65, 0.6, 0.55, 0.5, 0.45, 0.4, 0.35, 0.3]. If the element in [*a*(*h*)] satisfies the second feature, the 24 elements in [*a*(*h*)] may be [0.9, 0.8, 0.75, 0.7, 0.65, 0.6, 0.55, 0.5, 0.45, 0.4, 0.35, 0.3, 0.3, 0.35, 0.4, 0.45, 0.5, 0.55, 0.6, 0.65, 0.7, 0.75, 0.8, 0.9].

In another example, the first feature may be: When *h* is less than *k*1, *a*(*h*) is less than *a*(*h +* 1) ; when *h* is greater than or equal to *k*1 and less than or equal to k2*, a*(*h*)=*a*(*h +* 1); or when *h* is greater than *k*2, *a*(*h*) is less than *a*(*h* - 1). The second feature may be: When *h* is less than *k*1, *a*(*h*) is greater than *a*(*h* + 1); when *h* is greater than or equal to *k*1 and less than or equal to *k*2, *a*(*h*)=*a*(*h +* 1); or when *h* is greater than *k*2, *a*(*h*) is greater than *a*(*h* - 1). Both *k*1 and *k*2 are positive integers greater than 1 and less than H, and *k*1 is less than *k*2.

For example, H is 24, *k*1 is 10, and *k*2 is 15. If the element in [*a*(*h*)] satisfies the first feature, the 24 elements in [*a*(*h*)] may be [0.3, 0.35, 0.4, 0.45, 0.5, 0.55, 0.6, 0.65, 0.7, 0.8, 0.8, 0.8, 0.8, 0.8, 0.8, 0.7, 0.65, 0.6, 0.55, 0.5, 0.45, 0.4, 0.35, 0.3]. If the element in [*a*(*h*)] satisfies the second feature, the 24 elements in [*a*(*h*)] may be [0.9, 0.8, 0.75, 0.7, 0.65, 0.6, 0.55, 0.5, 0.45, 0.3, 0.3, 0.3, 0.3, 0.3, 0.3, 0.45, 0.5, 0.55, 0.6, 0.65, 0.7, 0.75, 0.8, 0.9].

Case 2: The first symbol is N symbol groups, each symbol group includes M symbols, each being denoted as [*c*(*n*)(*m*)]. [*c*(*n*)(*m*)] includes *N* × *M* elements. *n* belongs to {1, ..., N}, that is, *n* ∈ {1, ..., N}. *m* belongs to {1, ..., M}, that is, m ∈ {1, ..., M}. The *N* × *M* elements in [*c*(*n*)(*m*)] may be respectively *c*(1)(1) , ..., *c*(1)(M), *c*(2)(1), *... , ...,c*(*N*)(1), ..., *c*(*N*)(*M*). In other words, an m^{th} symbol in an n^{th} symbol group in [*c*(*n*)(*m*)] may be *c*(*n*)(*m*). For "..." in [1, ..., N] and "..." in [1, ..., M], refer to the descriptions of "..." in [1, ..., H]. Details are not described again.

In Case 2, the first coefficient may include [*a*(*m*)] and/or [*b*(*n*)]. To be specific, when the first symbol is [*c*(*n*)(*m*)], the first coefficient may be [*a*(*m*)], may be [*b*(*n*)], or may include [*a*(*m*)] and [*b*(*n*)]. [*a*(*m*)] includes M elements, and the M elements in [*a*(*m*)] may be respectively *a*(1), ..., *a*(*M*). In other words, an m^{th} coefficient in [*a*(*m*)] is *a*(*m*). For example, an element in [*a*(*m*)] may satisfy a third feature or satisfy a fourth feature.

In an example, the third feature may be: When *m* is less than *i*, *a*(*m*) is less than *a*(*m* + 1), or when *m* is greater than *i*, *a*(*m*) is less than or equal to *a*(*m* - 1). The fourth feature may be: When *m* is less than *i*, *a*(*m*) is greater than *a*(*m* + 1), or when m is greater than *i*, *a*(*m*) is greater than or equal to *a*(*m* - 1). For example, M is an odd number, and the third feature is: When *m* is less than *i*, *a*(*m*) is less than *a*(*m* + 1), or when *m* is greater than *i, a*(*m*) is less than *a*(*m* - 1). The fourth feature is: When *m* is less than *i*, *a*(*m*) is greater than *a*(*m* + 1), or when *m* is greater than *i, a*(*m*) is greater than *a*(*m* - 1). For another example, M is an even number, and the third feature is: When *m* is less than *i*, *a*(*m*) is less than *a*(*m* + 1), or when *m* is greater than *i, a*(*m*) is less than or equal to *a*(*m* - 1). The fourth feature is: When *m* is less than *i*, *a*(*m*) is greater than *a*(*m* + 1), or when m is greater than *i*, *a*(*m*) is greater than or equal to *a*(*m* - 1).

*i* is a positive integer greater than 1 and less than M. Optionally, when M is an odd number, *i* is (M+1)/2; or when M is an even number, *i* is M/2.

For example, M is 11, and i is 6. If the element in [*a*(*m*)] satisfies the third feature, the 11 elements in [*a*(*m*)] may be [0.3, 0.35, 0.4, 0.45, 0.5, 0.6, 0.5, 0.45, 0.4, 0.35, 0.3]. If the element in [*a*(*m*)] satisfies the fourth feature, the 11 elements in [*a*(*m*)] may be [0.6, 0.5, 0.45, 0.4, 0.35, 0.3, 0.35, 0.4, 0.45, 0.5, 0.6].

For example, M is 12, and *i* is 6. If the element in [*a*(*m*)] satisfies the third feature, the 12 elements in [*a*(*m*)] may be [0.3, 0.35, 0.4, 0.45, 0.5, 0.6, 0.6, 0.5, 0.45, 0.4, 0.35, 0.3]. If the element in [*a*(*m*)] satisfies the fourth feature, the 12 elements in [*a*(*m*)] may be [0.6, 0.5, 0.45, 0.4, 0.35, 0.3, 0.3, 0.35, 0.4, 0.45, 0.5, 0.6].

In another example, the third feature may be: When m is less than *i*1, *a*(*m*) is less than *a*(*m* + 1) ; when *m* is greater than or equal to *i*1 and less than or equal to *i*2, *a*(*m*)=*a*(*m* + 1); or when *m* is greater than *i*2, a(m) is less than *a*(*m* - 1). The fourth feature may be: When *m* is less than *i*1, *a*(*m*) is greater than *a*(*m* + 1); when m is greater than or equal to *i*1 and less than or equal to *i*2, *a*(*m*)=*a*(*m* + 1); or when m is greater than *i*2, *a*(*m*) is greater than *a*(*m* - 1). Both *i*1 and *i*2 are positive integers greater than 1 and less than M, and *i*1 is less than *i*2.

For example, M is 12, *i*1 is 5, and *i*2 is 8. If the element in [*a*(*m*)] satisfies the third feature, the 12 elements in [*a*(*m*)] may be [0.3, 0.35, 0.4, 0.45, 0.5, 0.5, 0.5, 0.5, 0.45, 0.4, 0.35, 0.3]. If the element in [*a*(*m*)] satisfies the fourth feature, the 12 elements in [*a*(*m*)] may be [0.5, 0.45, 0.4, 0.35, 0.3, 0.3, 0.3, 0.3, 0.35, 0.4, 0.45, 0.5].

[*b*(*n*)] includes N elements, and the N elements in [*b*(*n*)] may be respectively *b*(1), ..., *b*(*n*)*.* In other words, an n^{th} coefficient in [*b*(*n*)] is *b*(*n*). For example, an element in [*b*(*n*)] may satisfy a fifth feature or satisfy a sixth feature.

In an example, the fifth feature may be: When *n* is less than *j, b*(*n*) is less than *b*(*n* + 1), or when *n* is greater than *j, b*(*n*) is less than or equal to *b*(*n* - 1). The sixth feature may be: When *n* is less than *j, b*(*n*) is greater than *b*(*n* + 1), or when *n* is greater than *j, b*(*n*) is greater than or equal to *b*(*n* - 1). For example, N is an odd number, and the fifth feature is: When *n* is less than *j, b*(*n*) is less than *b*(*n* + 1), or when *n* is greater than *j, b*(*n*) is less than *b*(*n* - 1). The sixth feature is: When *n* is less than *j, b*(*n*) is greater than *b*(*n* + 1), or when *n* is greater than *j, b*(*n*) is greater than *b*(*n* - 1). For another example, N is an even number, and the fifth feature is: When *n* is less than *j, b*(*n*) is less than *b*(*n* + 1), or when *n* is greater than *j, b*(*n*) is less than or equal to *b*(*n* - 1). The sixth feature is: When *n* is less than *j, b*(*n*) is greater than *b*(*n* + 1), or when *n* is greater than *j, b*(*n*) is greater than or equal to *b*(*n* - 1).

*j* is a positive integer greater than 1 and less than N. Optionally, when N is an odd number, *j* is (N+1)/2; or when N is an even number, *j* is N/2.

For example, N is 9, and *j* is 5. If the element in [*b*(*n*)] satisfies the fifth feature, the nine elements in [*b*(*n*)] may be [0.3, 0.35, 0.4, 0.45, 0.5, 0.45, 0.4, 0.35, 0.3]. If the element in [*b*(*n*)] satisfies the sixth feature, the nine elements in [*b*(*n*)] may be [0.5, 0.45, 0.4, 0.35, 0.3, 0.35, 0.4, 0.45, 0.5].

For example, N is 10, and *j* is 5. If the element in [*b*(*n*)] satisfies the fifth feature, the 10 elements in [*b*(*n*)] may be [0.3, 0.35, 0.4, 0.45, 0.5, 0.5, 0.45, 0.4, 0.35, 0.3]. If the element in [*b*(*n*)] satisfies the sixth feature, the 10 elements in [b(n)] may be [0.5, 0.45, 0.4, 0.35, 0.3, 0.3, 0.35, 0.4, 0.45, 0.5].

In another example, the fifth feature may be: When *n* is less than *j*1, *b*(*n*) is less than *b*(*n* + 1) ; when *n* is less than or equal to *j*1 and greater than or equal to *j*2, *b*(*n*)=*b*(*n* + 1); or when *n* is greater than *j*2, *b*(*n*) is less than *b*(*n* - 1). The sixth feature may be: When *n* is less than *j*1, *b*(*n*) is greater than *b*(*n* + 1); when *n* is less than or equal to *j*1 and greater than or equal to *j*2, *b*(*n*)=*b*(*n* + 1); or when *n* is greater than *j*2, *b*(*n*) is greater than *b*(*n* - 1). Both *j*1 and *j*2 are positive integers greater than 1 and less than N, and *j*1 is less than *j*2.

For example, N is 10, *j*1 is 4, and *j*2 is 7. If the element in [*b*(*n*)] satisfies the fifth feature, the 10 elements in [*b*(*n*)] may be [0.3, 0.35, 0.4, 0.45, 0.45, 0.45, 0.45, 0.4, 0.35, 0.3]. If the element in [*b*(*n*)] satisfies the sixth feature, the 10 elements in [*b*(*n*)] may be [0.45, 0.4, 0.35, 0.3, 0.3, 0.3, 0.3, 0.35, 0.4, 0.45].

It may be understood that various values of the first coefficient are merely used as examples, and a specific value of the first coefficient is not limited. Optionally, the specific value of the first coefficient may be predefined, or may be configured by the third communication apparatus. This is not limited.

S402: The first communication apparatus determines a second symbol based on the first coefficient.

For example, the first communication apparatus may process the first symbol based on the first coefficient, to obtain the second symbol. For example, the first communication apparatus preprocesses the first symbol based on the first coefficient, to obtain the second symbol. The second symbol includes H elements.

For the foregoing Case 1, the first symbol is [*c*(*h*)], and the second symbol is a symbol group, and may be denoted as [*d*(*h*)]. [*d*(*h*)] includes H elements, and an h^{th} symbol in [*d*(*h*)] may be *d*(*h*). For details, refer to the descriptions of [*c*(*h*)]. Details are not described again.

Further, that the first communication apparatus determines the second symbol based on the first coefficient may be replaced with: The first communication apparatus determines [*d*(*h*)] based on [*a*(*h*)]*.* For example, the first communication apparatus may process [*c*(*h*)] based on [*a*(*h*)], to obtain [*d*(*h*)], where an element in [*d*(*h*)] is *d*(*h*)=*a*(*h*) × *c*(*h*).

For the foregoing Case 2, the first symbol is [*c*(*n*)(*m*)], the second symbol is N symbol groups, each symbol group includes M symbols, and each symbol may be denoted as [*d*(*n*)(*m*)]. [*d*(*n*)(*m*)] includes *N* × *M* elements. The m^{th} symbol in the n^{th} symbol group in [*c*(*n*)(*m*)] may be *c*(*n*)(*m*). For details, refer to the descriptions of [*c*(*n*)(*m*)]. Details are not described again.

Further, that the first communication apparatus determines the second symbol based on the first coefficient may be replaced with: The first communication apparatus determines [*d*(*n*)(*m*)] based on [*a*(*m*)] and/or [*b*(*n*)]. In other words, the first communication apparatus may determine [*d*(*n*)(*m*)] based on [*a*(*m*)], determine [*d*(*n*)(*m*)] based on [*b*(*n*)], or determine [*d*(*n*)(*m*)] based on [*a*(*m*)] and [*b*(*n*)]. For example, the first communication apparatus may process [*c*(*n*)(*m*)] based on [*a*(*m*)], to obtain [*d*(*n*)(*m*)], where an element in [*d*(*n*)(*m*)] is *d*(*n*)(*m*) = *a*(*m*) × *c*(*n*)(*m*)*.* For another example, the first communication apparatus may process [*c*(*n*)(*m*)] based on [*b*(*n*)], to obtain [*d*(*n*)(*m*)], where an element in [*d*(*n*)(*m*)] is *d*(*n*)(*m*)=*b*(*n*) × *c*(*n*)(*m*). For still another example, the first communication apparatus may process [*c*(*n*)(*m*)] based on [*a*(*m*)] and [*b*(*n*)], to obtain [*d*(*n*)(*m*)], where an element in [*d*(*n*)(*m*)] is *d*(*n*)(*m*)=*a*(*m*) × *b*(*n*) × *c*(*n*)(*m*).

S403: The first communication apparatus generates a first signal based on the second symbol.

That the first communication apparatus generates the first signal based on the second symbol may be understood as a process in which the first communication apparatus performs corresponding processing on the second symbol, so that the second symbol can be transmitted. A specific implementation process in which the first communication apparatus generates the first signal based on the second symbol is not limited in embodiments of this application. Optionally, the first signal is a sensing signal.

It may be understood that, for the foregoing Case 1, that the first communication apparatus generates the first signal based on the second symbol may be replaced with: The first communication apparatus generates the first signal based on [*d*(*h*)]. For the foregoing Case 2, that the first communication apparatus generates the first signal based on the second symbol may be replaced with: The first communication apparatus generates the first signal based on [*d*(*n*)(*m*)].

S404: The first communication apparatus sends the first signal.

For example, the first communication apparatus may map the first signal to a time domain resource for sending. For example, when the second symbol is [*d*(*h*)], the first communication apparatus may include the first signal in one time domain symbol for sending. H symbols in the first signal are carried on H frequency domain subcarriers on the time domain symbol, and one symbol is carried on one frequency domain subcarrier. For another example, when the second symbol is [*d*(*n*)(*m*)]*,* the first communication apparatus may include the first signal in N time domain symbols for sending. Each of the N time domain symbols carries M symbols, and one symbol is carried on one frequency domain subcarrier. In other words, an n^{th} time domain symbol in the N time domain symbols carries *d*(*n*)(1), *d*(*n*)(2), ..., *d*(*n*)(*m*), and *d*(*n*)(*m*) is carried on an m^{th} frequency domain subcarrier on the n^{th} time domain symbol.

S405: A second communication apparatus receives an echo signal of the first signal.

In embodiments of this application, an example in which the first signal is a sensing signal is used for description. The first communication apparatus sends the first signal, and the first signal is reflected on a sensing target to form the echo signal. Further, the second communication apparatus may receive the echo signal of the first signal.

In a possible implementation, the first communication apparatus may further send the first information. This is not shown in FIG. 4. For example, the first communication apparatus may send the first information to the second communication apparatus. Correspondingly, the second communication apparatus receives the first information from the first communication apparatus. For example, when the first coefficient is a coefficient determined by the first communication apparatus, the first communication apparatus may send the first information to the second communication apparatus, so that the second communication apparatus determines the coefficient used by the first communication apparatus. For another example, the first information is from the third communication apparatus, and the first communication apparatus may forward the first information to the second communication apparatus, so that the second communication apparatus determines a coefficient used by the first communication apparatus. Optionally, the first information may be carried in the DCI, may be carried in the RRC layer signaling, or may be carried in the MAC layer signaling. This is not limited.

The first information indicates the first coefficient. The following describes implementations of the first information for the two cases of the first coefficient.

For the foregoing Case 1, the first information may indicate [*a*(*h*)]*.* For example, the first information may include a first field, and the first information may indicate [*a*(*h*)] via the first field.

In an example, a state value of the first field may indicate that the element in [*a*(*h*)] satisfies the first feature or satisfies the second feature. Specifically, a value range of [*a*(*h*)] may be predefined (or pre-agreed, or from the third communication apparatus, or the like). The first communication apparatus (or the second communication apparatus) may determine, based on the first field in the first information, a feature satisfied by the element in [*a*(*h*)], and determine a specific value of the element in [*a*(*h*)] based on the feature and the value range of [*a*(*h*)]*.* For example, the first field has 1 bit. When the state value of the first field is 0, the first field indicates that the element in [*a*(*h*)] satisfies the first feature. When the state value of the first field is 1, the first field indicates that the element in [*a*(*h*)] satisfies the second feature.

Optionally, the state value of the first field may alternatively indicate not to use the first coefficient to process the first symbol. For example, the first field has 2 bits. When the state value of the first field is 00, the first field indicates that the element in [*a*(*h*)] satisfies the first feature. When the state value of the first field is 01, the first field indicates that the element in [*a*(*h*)] satisfies the second feature. When the state value of the first field is 11, the first field indicates not to use [*a*(*h*)] to process [*c*(*h*)].

In another example, a state value of the first field may indicate a value of [*a*(*h*)]*.* For example, the state value of the first field may indicate an identifier of a candidate value of [*a*(*h*)]*.* Specifically, there are a plurality of candidate values of [*a*(*h*)], and the plurality of candidate values may be predefined (or pre-agreed, or from the third communication apparatus, or the like). The first communication apparatus (or the second communication apparatus) may determine the identifier of the candidate value based on the first field in the first information, and determine a specific value of the element in [*a*(*h*)] from the plurality of candidate values based on the identifier.

Optionally, the state value of the first field may alternatively indicate not to use the first coefficient to process the first symbol. For example, it is assumed that the plurality of candidate values include a candidate value 1, a candidate value 2, and a candidate value 3, and the first field has 2 bits. When the state value of the first field is 00, the first field indicates that [*a*(*h*)] is of the candidate value 1. When the state value of the first field is 01, the first field indicates that [*a*(*h*)] is of the candidate value 2. When the state value of the first field is 10, the first field indicates that [*a*(*h*)] is of the candidate value 3. When the state value of the first field is 11, the first field indicates not to use [*a*(*h*)] to process [*c*(*h*)], as shown in Table 1.

**Table 1**

| State value of a first field | Meaning |
|---|---|
| 00 | [*a*(*h*)] is of a candidate value 1 |
| 01 | [*a*(*h*)] is of a candidate value 2 |
| 10 | [*a*(*h*)] is of a candidate value 3 |
| 11 | Not to use [*a*(*h*)] to process [*c*(*h*)] |

For the foregoing Case 2, the first information may indicate [*a*(*m*)], indicate [*b*(*n*)], or indicate [*a*(*m*)] and [*b*(*n*)]. For example, the first information includes a second field, and the first information may indicate [*a*(*m*)] and/or [*b*(*n*)] via the second field. Alternatively, the first information includes a third field, and the first information may indicate [*b*(*n*)] via the third field. Alternatively, the first information includes a second field and a third field, and the first information may indicate [*a*(*m*)] via the second field and indicate [*b*(*n*)] via the third field.

In an example, a state value of the second field may indicate that the element in [*a*(*m*)] satisfies the third feature or satisfies the fourth feature. A state value of the third field may indicate that the element in [*b*(*n*)] satisfies the fifth feature or satisfies the sixth feature. Specifically, a value range of [*a*(*m*)] and a value range of [*b*(*n*)] may be predefined (or pre-agreed, or from the third communication apparatus, or the like). Further, the first communication apparatus (or the second communication apparatus) may determine, based on the second field in the first information, a feature satisfied by the element in [*a*(*m*)], and determine a specific value of the element in [*a*(*m*)] based on the feature and the value range of [*a*(*m*)]; and/or the first communication apparatus (or the second communication apparatus) may determine, based on the third field in the first information, a feature satisfied by the element in [*b*(*n*)], and determine a specific value of the element in [*b*(*n*)] based on the feature and the value range of [*b*(*n*)]. For example, the second field has 1 bit. When the state value of the second field is 0, the second field indicates that the element in [*a*(*m*)] satisfies the third feature. When the state value of the second field is 1, the second field indicates that the element in [*a*(*m*)] satisfies the fourth feature. For example, the third field has 1 bit. When the state value of the third field is 0, the third field indicates that the element in [*b*(*n*)] satisfies the fifth feature. When the state value of the third field is 1, the third field indicates that the element in [*b*(*n*)] satisfies the sixth feature.

Optionally, the state value of the second field may alternatively indicate not to use [*a*(*m*)] to process [*c*(*n*)(*m*)]. For example, the second field has 2 bits. When the state value of the second field is 00, the second field indicates that the element in [*a*(*m*)] satisfies the third feature. When the state value of the second field is 01, the second field indicates that the element in [*a*(*m*)] satisfies the fourth feature. When the state value of the second field is 10, the second field indicates not to use [*a*(*m*)] to process [*c*(*n*)(*m*)], as shown in Table 2.

**Table 2**

| State value of a second field | Meaning |
|---|---|
| 00 | An element in [*a*(*m*)] satisfies a third feature |
| 01 | An element in [*a*(*m*)] satisfies a fourth feature |
| 10 | Not to use [*a*(*m*)] to process [*c*(*n*)(*m*)] |

Optionally, the state value of the third field may alternatively indicate not to use [*b*(*n*)] to process [*c*(*n*)(*m*)]. For example, the third field has 2 bits. When the state value of the third field is 00, the third field indicates that the element in [*b*(*n*)] satisfies the fifth feature. When the state value of the third field is 01, the third field indicates that the element in [*b*(*n*)] satisfies the sixth feature. When the state value of the third field is 10, the third field indicates not to use [*b*(*n*)] to process [*c*(*n*)(*m*)], as shown in Table 3.

**Table 3**

| State value of a third field | Meaning |
|---|---|
| 00 | An element in [*b*(*n*)] satisfies a fifth feature |
| 01 | An element in [*b*(*n*)] satisfies a sixth feature |
| 10 | Not to use [*b*(*n*)] to process [*c*(*n*)(*m*)] |

In another example, a state value of the second field may indicate [*a*(*m*)], indicate [*b*(*n*)], or indicate [*a*(*m*)] and [*b*(*n*)]. Specifically, [*a*(*m*)] and [*b*(*n*)] may be predefined (or pre-agreed, or from the third communication apparatus, or the like). The first communication apparatus may determine, based on the second field in the first information, to use [*a*(*m*)] to process [*c*(*n*)(*m*)], use [*b*(*n*)] to process [*c*(*n*)(*m*)], or use [*a*(*m*)] and [*b*(*n*)] to process [*c*(*n*)(*m*)]*.* Alternatively, the second communication apparatus may determine, based on the second field in the first information, that [*d*(*n*)(*m*)] is determined based on [*a*(*m*)], that [*d*(*n*)(*m*)] is determined based on [*b*(*n*)], or that [*d*(*n*)(*m*)] is determined based on [*a*(*m*)] and [*b*(*n*)].

Optionally, the state value of the second field may alternatively indicate not to use the first coefficient to process the first symbol. For example, the second field has 2 bits. When the state value of the second field is 00, the second field indicates to use [*a*(*m*)] to process [*c*(*n*)(*m*)]. When the state value of the second field is 01, the second field indicates to use [*b*(*n*)] to process [*c*(*n*)(*m*)]. When the state value of the second field is 10, the second field indicates to use [*a*(*m*)] and [*b*(*n*)] to process [*c*(*n*)(*m*)]. When the state value of the second field is 11, the second field indicates not to use the first coefficient to process the first symbol, as shown in Table 4.

**Table 4**

| State value of a second field | Meaning |
|---|---|
| 00 | Use [*a*(*m*)] to process [*c*(*n*)(*m*)] |
| 01 | Use [*b*(*n*)] to process [*c*(*n*)(*m*)] |
| 10 | Use [*a*(*m*)] and [*b*(*n*)] to process [*c*(*n*)(*m*)] |
| 11 | Not to use a first coefficient to process a first symbol |

In still another example, a state value of the second field may indicate a value of [*a*(*m*)]. For example, the state value of the second field may indicate an identifier of a candidate value of [*a*(*m*)]. Specifically, there are a plurality of candidate values of [*a*(*m*)], and the plurality of candidate values may be predefined (or pre-agreed, or from the third communication apparatus, or the like). The first communication apparatus (or the second communication apparatus) may determine the identifier of the candidate value based on the second field in the first information, and determine a specific value of the element in [*a*(*m*)] from the plurality of candidate values based on the identifier. Optionally, the state value of the second field may alternatively indicate not to use [*a*(*m*)] to process [*c*(*n*)(*m*)]. For details, refer to content in Table 1. Details are not described again.

A state value of the third field may indicate a value of [*b*(*n*)]. For example, the state value of the third field may indicate an identifier of a candidate value of [*b*(*n*)]. Specifically, there are a plurality of candidate values of [*b*(*n*)], and the plurality of candidate values may be predefined (or pre-agreed, or from the third communication apparatus, or the like). The first communication apparatus (or the second communication apparatus) may determine the identifier of the candidate value based on the third field in the first information, and determine a specific value of the element in [*b*(*n*)] from the plurality of candidate values based on the identifier. Optionally, the state value of the third field may alternatively indicate not to use [*b*(*n*)] to process [*c*(*n*)(*m*)]. For details, refer to content in Table 1. Details are not described again.

S406: The second communication apparatus processes the echo signal of the first signal.

The second communication apparatus processes the echo signal of the first signal, to obtain sensing data, for example, data such as a position and a speed of the sensing target. This is not limited. For example, the second communication apparatus may process the echo signal of the first signal based on the first coefficient. For example, the second communication apparatus may determine a second coefficient based on the first coefficient, and process the echo signal of the first signal based on the second coefficient. The second coefficient is associated with the first coefficient. For example, the second communication apparatus may perform matched filtering on the echo signal of the first signal based on the second coefficient. It should be noted that a specific implementation process in which the second communication apparatus processes the echo signal of the first signal based on the second coefficient is not limited in embodiments of this application.

It may be understood that, for the foregoing Case 1, that the second communication apparatus processes the echo signal of the first signal based on the first coefficient may be replaced with: The second communication apparatus processes the echo signal of the first signal based on [*d*(*h*)]. For the foregoing Case 2, that the second communication apparatus processes the echo signal of the first signal based on the first coefficient may be replaced with: The second communication apparatus processes the echo signal of the first signal based on [*a*(*m*)] and/or [*b*(*n*)]. For example, if the first communication apparatus determines [*d*(*n*)(*m*)] based on [*a*(*m*)], the second communication apparatus may process the echo signal of the first signal based on [*a*(*m*)]. For another example, if the first communication apparatus determines [*d*(*n*)(*m*)] based on [*b*(*n*)], the second communication apparatus may process the echo signal of the first signal based on [*b*(*n*)]. For still another example, if the first communication apparatus determines [*d*(*n*)(*m*)] based on [*a*(*m*)] and [*b*(*n*)], the second communication apparatus may process the echo signal of the first signal based on [*a*(*m*)] and [*b*(*n*)].

Optionally, the second communication apparatus may determine the first coefficient. For example, the second communication apparatus may read the locally stored first coefficient, or may determine the first coefficient based on the first information. For a specific implementation process in which the second communication apparatus determines the first coefficient based on the first information, refer to the foregoing content. Details are not described again. It should be noted that a specific implementation process in which the second communication apparatus determines the first coefficient is not limited in embodiments of this application.

Optionally, based on the embodiment shown in FIG. 4, the first signal may be in a first time period (for example, the first communication apparatus sends the first signal in the first time period), and the method may further include: The first communication apparatus sends a second signal in a second time period following the first time period, and the second communication apparatus receives an echo signal of the second signal. Further, the second communication apparatus may process the echo signal of the first signal and the echo signal of the second signal. For example, the second communication apparatus may perform joint processing on the echo signal of the first signal and the echo signal of the second signal, to improve sensing performance.

Specifically, the first communication apparatus may determine a fourth symbol based on a third coefficient, generate the second signal based on the fourth symbol, and send the second signal in the second time period following the first time period. The third coefficient may be used to process, for example, preprocess, a third symbol. The third symbol is a to-be-preprocessed symbol of the first communication apparatus. For details, refer to related content of the first symbol. Details are not described again. Optionally, the first communication apparatus may further determine the third coefficient. For a specific implementation process, refer to content in S401. Details are not described again.

In an example, the third symbol may be denoted as [*g*(*h*)], the third coefficient may be denoted as [*e*(*h*)], and the fourth symbol may be denoted as [*f*(*h*)], where [*g*(*h*)], [*e*(*h*)], and [*f*(*h*)] each include H elements. Correspondingly, the first communication apparatus may determine [*f*(*h*)] based on [*e*(*h*)], and generate the second signal based on [(*h*)]. For example, the first communication apparatus may process [*g*(*h*)] based on [*e*(*h*)], to obtain [*f*(*h*)], where an element in [*f*(*h*)] is *f*(*h*)=*e*(*h*) × *g*(*h*)*.*

Optionally, when the element in [*a*(*h*)] satisfies the first feature, an element in [*e*(*h*)] may satisfy: When *h* is less than *k, e*(*h*) is less than *e*(*h* + 1), or when *h* is greater than *k, e*(*h*) is less than or equal to *e*(*h -* 1). Alternatively, when the element in [*a*(*h*)] satisfies the second feature, an element in [*e*(*h*)] may satisfy: When *h* is less than *k, e*(*h*) is greater than *e*(*h* + 1), or when *h* is greater than *k, e*(*h*) is greater than or equal to *e*(*h* - 1).

In another example, the third symbol may be denoted as [*g*(*n*)(*m*)], the third coefficient may include [*e*(*m*)] and/or [*q*(*n*)]*,* and the fourth symbol may be denoted as [*f*(*n*)*(m*)], where [*e*(*m*)] includes M elements, [*q*(*n*)] includes N elements, and both [*g*(*n*)(*m*)] and [*f*(*n*)*(m*)] include *N* × *M* elements. Correspondingly, the first communication apparatus may determine [*f*(*n*)*(m*)] based on [*e*(*m*)] and/or [*q*(*n*)], and generate the second signal based on [*f*(*n*)(*m*)].

For example, when [*d*(*n*)(*m*)] is a symbol determined based on [*a*(*m*)], the first communication apparatus may determine [*f*(*n*)*(m*)] based on [*e*(*m*)]. For example, the first communication apparatus may process [*g*(*n*)(*m*)] based on [*e*(*m*)], to obtain [*f*(*n*)(*m*)], where an element in [*f*(*n*)*(m*)] is *f*(*n*)(*m*)=*e*(*m*) × *g*(*n*)(*m*).

For example, when [*d*(*n*)(*m*)] is a symbol determined based on [*b*(*n*)]*,* the first communication apparatus may determine [*f*(*n*)*(m*)] based on [*g*(*n*)]*.* For example, the first communication apparatus may process [*g*(*n*)(*m*)] based on [*q*(*n*)], to obtain [*f*(*n*)*(m*)], where an element in [*f*(*n*)*(m*)] is *f*(*n*)(*m*)=*q*(*n*) × *g*(*n*)(*m*)*.*

For example, when [*d*(*n*)(*m*)] is a symbol determined based on [*a*(*m*)] and [*b*(*n*)], the first communication apparatus may determine [*f*(*n*)(*m*)] based on [*e*(*m*)] and [*q*(*n*)]. For example, the first communication apparatus may process [*g*(*n)(m*)] based on *[e(m)]* and [*q*(*n*)], to obtain [*f*(*n*)*(m*)], where an element in [*f*(*n*)*(m*)] is *f*(*n*)(*m*)=*e*(*m*) × *q*(*n*) × *g*(*n*)*(m*).

Optionally, when the element in [*a*(*m*)] satisfies the third feature, an element in [*e*(*m*)] may satisfy: When *m* is less than *i*, *e*(*m*) is less than *e*(*m* + 1), or when *m* is greater than *i*, *e*(*m*) is less than or equal to *e*(*m* - 1). Alternatively, when the element in [*a*(*m*)] satisfies the fourth feature, an element in [*e*(*m*)] may satisfy: When *m* is less than *i*, *e*(*m*) is greater than *e*(*m* + 1), or when *m* is greater than *i*, *e*(*m*) is greater than or equal to *e*(*m* - 1).

Optionally, when the element in [*b*(*n*)] satisfies the fifth feature, an element in [*q*(*n*)] may satisfy: When *n* is less than *j, q*(*n*) is less than *q*(*n* + 1), or when *n* is greater than *j, q*(*n*) is less than or equal to *q*(*n* - 1). Alternatively, when the element in [*b*(*n*)] satisfies the sixth feature, an element in [*q*(*n*)] may satisfy: When *n* is less than *j, q*(*n*) is greater than *q*(*n* + 1), or when *n* is greater than *j, q*(*n*) is greater than or equal to *q*(*n* - 1).

It should be noted that, for a specific implementation process in which the first communication apparatus may determine the fourth symbol based on the third coefficient and generate the second signal based on the fourth symbol, refer to content in S402 and S403. Details are not described again.

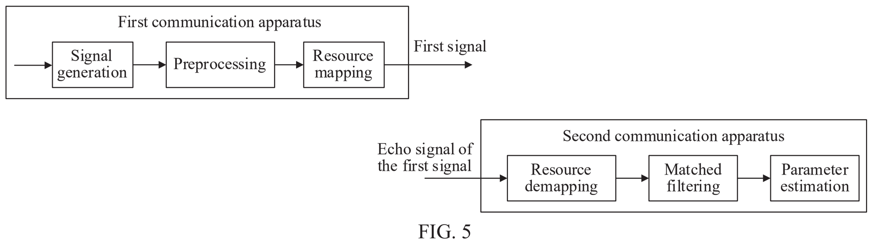

In the embodiment shown in FIG. 4, the first communication apparatus processes a to-be-sent symbol based on the first coefficient, and the second communication apparatus may perform matched filtering on the received echo signal based on the first coefficient. As shown in FIG. 5, in comparison with the sensing signal processing procedure shown in FIG. 1, in this embodiment of this application, a transmit-end device (namely, a first communication apparatus) may perform preprocessing based on a first coefficient, and a receive-end device (namely, a second communication apparatus) may perform matched filtering on a received echo signal based on the first coefficient, so that a sensing performance loss caused by filtering introduced by the receive-end device can be reduced, and sensing performance can be improved.

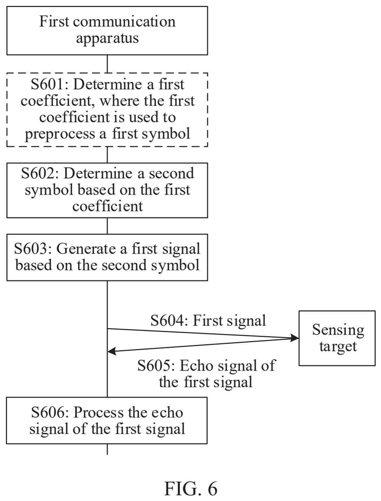

FIG. 6 is a schematic flowchart of another communication method according to an embodiment of this application. In this embodiment, a monostatic sensing mode is used as an example. As shown in FIG. 6, the method may further include the following steps.

S601: A first communication apparatus determines a first coefficient.

S601 is an optional step, and is represented by a dashed line in FIG. 6. The first coefficient may be used to process, for example, preprocess, a first symbol. For a specific implementation process of S601, refer to content in S401. Details are not described again.

S602: The first communication apparatus determines a second symbol based on the first coefficient.

For example, the first communication apparatus may process the first symbol based on the first coefficient, to obtain the second symbol. For example, the first communication apparatus determines [*d*(*h*)] based on [*a*(*h*)]*.* For another example, the first communication apparatus determines [*d*(*n*)(*m*)] based on [*a*(*m*)] and/or [*b*(*n*)]. Optionally, the first communication apparatus preprocesses the first symbol based on the first coefficient, to obtain the second symbol. For example, the first communication apparatus may process [*c*(*h*)] based on [*a*(*h*)], to obtain [*d*(*h*)], where an element in [*d*(*h*)] is *d*(*h*)=*a*(*h*) × *c*(*h*). For example, the first communication apparatus may process [*c*(*n*)(*m*)] based on [*a*(*m*)], to obtain [*d*(*n*)(*m*)], where an element in [*d*(*n*)(*m*)] is *d*(*n*)(m*)* = *a*(*m*) × *c*(*n*)(*m*)*.* For another example, the first communication apparatus may process [*c*(*n*)(*m*)] based on [*b*(*n*)], to obtain [*d*(*n*)(*m*)], where an element in [*d*(*n*)(*m*)] is *d*(*n*)(*m*)=*b*(*n*) × *c*(*n*)(*m*). For still another example, the first communication apparatus may process [*c*(*n*)(*m*)] based on [*a*(*m*)] and [*b*(*n*)], to obtain [*d*(*n*)(*m*)], where an element in [*d*(*n*)(*m*)] is *d*(*n*)(*m*)=*a*(*m*) × *b*(*n*) × *c*(*n*)(*m*).

For a specific implementation process of S602, refer to content in S402. Details are not described again.

S603: The first communication apparatus generates a first signal based on the second symbol.

Optionally, the first signal is a sensing signal. For example, the first communication apparatus generates the first signal based on [*d*(*h*)]*.* Alternatively, the first communication apparatus generates the first signal based on [*d*(*n*)(*m*)]. For a specific implementation process of S603, refer to content in S403. Details are not described again.

S604: The first communication apparatus sends the first signal.

For a specific implementation process of S604, refer to content in S404. Details are not described again.

S605: The first communication apparatus receives an echo signal of the first signal.

In this embodiment of this application, an example in which the first signal is a sensing signal is used for description. The first communication apparatus sends the first signal, and the first signal is reflected on a sensing target to form the echo signal. Further, the first communication apparatus may receive the echo signal of the first signal.

S606: The first communication apparatus processes the echo signal of the first signal.

The first communication apparatus processes the echo signal of the first signal, to obtain sensing data, for example, data such as a position and a speed of the sensing target. This is not limited. For example, the first communication apparatus may process the echo signal of the first signal based on the first coefficient. For example, the first communication apparatus may determine a second coefficient based on the first coefficient, and process the echo signal of the first signal based on the second coefficient. The second coefficient is associated with the first coefficient. For example, the first communication apparatus may perform matched filtering on the echo signal of the first signal based on the second coefficient. It should be noted that a specific implementation process in which the first communication apparatus processes the echo signal of the first signal based on the second coefficient is not limited in embodiments of this application.

Optionally, based on the embodiment shown in FIG. 6, the first signal may be in a first time period (for example, the first communication apparatus sends the first signal in the first time period), and the method may further include: The first communication apparatus sends a second signal in a second time period following the first time period, and the first communication apparatus receives an echo signal of the second signal. Further, the first communication apparatus may process the echo signal of the first signal and the echo signal of the second signal. For example, the first communication apparatus may perform joint processing on the echo signal of the first signal and the echo signal of the second signal, to improve sensing performance. For a specific implementation process, refer to the foregoing related content. Details are not described again.

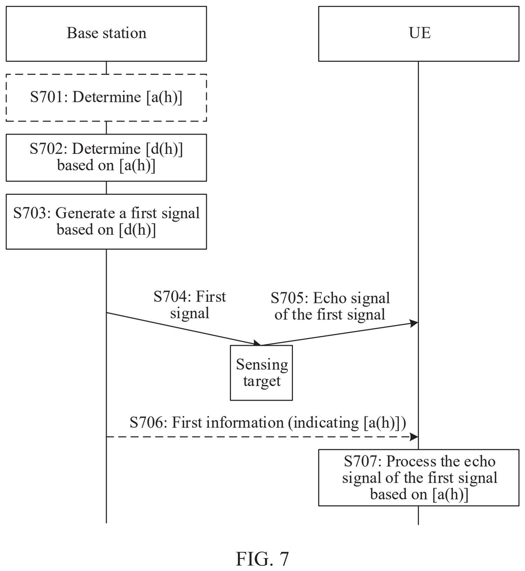

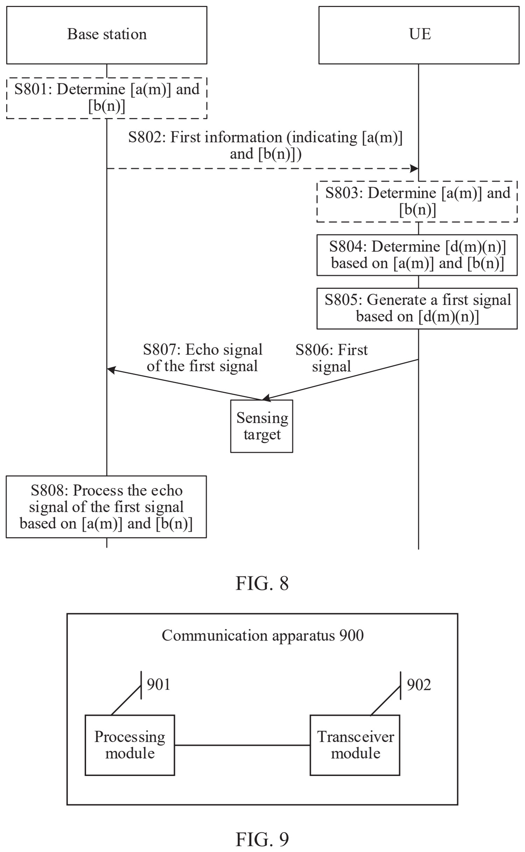

With reference to FIG. 7 and FIG. 8, the following separately uses the scenarios shown in (5) and (6) in FIG. 3 as examples to describe the embodiment shown in FIG. 4. For ease of understanding, the foregoing Case 1 is used as an example in an embodiment shown in FIG. 7. To be specific, a first symbol is [*c*(*h*)], a first coefficient is [*a*(*h*)], and a second symbol is [*d*(*h*)]. The foregoing Case 2 is used as an example in an embodiment shown in FIG. 8. To be specific, a first symbol is [*c*(*n*)(*m*)], a first coefficient includes [*a*(*m*)] and/or [*b*(*n*)], and a second symbol is [*d*(*n*)(*m*)]. For descriptions of [*c*(*h*)], [*a*(*h*)], [*d*(*h*)], [*c*(*n*)(*m*)], [*a*(*m*)], [*b*(*n*)], and [*d*(*n*)(*m*)], refer to related content in the embodiment shown in FIG. 4. Details are not described again.

FIG. 7 is a schematic flowchart of still another communication method according to an embodiment of this application. In this embodiment, a first communication apparatus is a base station, and a second communication apparatus is UE. As shown in FIG. 7, the method may include the following steps.

S701: The base station determines [*a*(*h*)]*.* [*a*(*h*)] is used to process, for example, preprocess, [*c*(*h*)]. S701 is an optional step, and is represented by a dashed line in FIG. 7. For a specific implementation process, refer to content in S401. Details are not described again.

S702: The base station determines [*d*(*h*)] based on [*a*(*h*)]*.* For example, the base station processes [*c*(*h*)] based on [*a*(*h*)], to obtain [*d*(*h*)]. An element in [*d*(*h*)] is *d*(*h*) = *a*(*h*) × *c*(*h*).

S703: The base station generates a first signal based on [*d*(*h*)].

S704: The base station sends the first signal.

S705: The UE receives an echo signal of the first signal.

For a specific implementation process of S703 to S705, correspondingly refer to content in S403 to S405. Details are not described again.

S706: The base station sends first information to the UE. Correspondingly, the UE receives the first information from the base station.

S706 is an optional step, and is represented by a dashed line in FIG. 7. In this embodiment, the first information may indicate [*a*(*h*)]*.* For a specific implementation process, refer to related content in the embodiment shown in FIG. 4. Details are not described again.

It should be noted that an execution sequence of S706 is used as an example and is not limited thereto. For example, the base station may further send the first information to the UE before S705 and after S701.

S707: The UE processes the echo signal of the first signal based on [*a*(*h*)]*.*

For example, the UE may determine [*a*(*h*)], and process the echo signal of the first signal based on [*a*(*h*)]*.* For example, the UE may read locally stored [*a*(*h*)], or may determine [*a*(*h*)] based on the first information. For a specific implementation process of S707, refer to content in S406. Details are not described again.

FIG. 8 is a schematic flowchart of still another communication method according to an embodiment of this application. In this embodiment, a first communication apparatus is UE, and a second communication apparatus is a base station. As shown in FIG. 8, the method may include the following steps.

S801: The base station determines [*a*(*m*)] and/or [*b*(*n*)].

S801 is an optional step, and is represented by a dashed line in FIG. 8. [*a*(*m*)] and/or [*b*(*n*)] is used to process, for example, preprocess, [*c*(*n*)(*m*)]. For example, the base station may configure a first coefficient used to process [*c*(*n*)(*m*)] to be [*a*(*m*)], [*b*(*n*)], or [*a*(*m*)] and [*b*(*n*)]. For a specific implementation process of S801, refer to content in S401. Details are not described again.

For ease of understanding, [*a*(*m*)] and [*b*(*n*)] are used as an example in the embodiment shown in FIG. 8.

S802: The base station sends first information to the UE. Correspondingly, the UE receives the first information from the base station.

S802 is an optional step, and is represented by a dashed line in FIG. 8. In this embodiment, the first information may indicate [*a*(*m*)], indicate [*b*(*n*)], or indicate [*a*(*m*)] and [*b*(*n*)]. For a specific implementation process, refer to related content in the embodiment shown in FIG. 4. Details are not described again. For example, in 801, if the base station determines [*a*(*m*)], the first information may indicate [*a*(*m*)]. For another example, in 801, if the base station determines [*b*(*n*)], the first information may indicate [*b*(*n*)]*.* For still another example, in 801, if the base station determines [*a*(*m*)] and [*b*(*n*)], the first information may indicate [*a*(*m*)] and [*b*(*n*)]*.*

S803: The UE determines [*a*(*m*)] and/or [*b*(*n*)].

S803 is an optional step, and is represented by a dashed line in FIG. 8. For example, the UE may determine [*a*(*m*)] and/or [*b*(*n*)] based on a locally stored parameter, or may determine [*a*(*m*)] and/or [*b*(*n*)] based on the first information. For example, when the first information indicates [*a*(*m*)], the UE may determine [*a*(*m*)] based on the first information. For another example, when the first information indicates [*b*(*n*)], the UE may determine [*b*(*n*)] based on the first information. For still another example, when the first information indicates [*a*(*m*)] and [*b*(*n*)], the UE may determine [*a*(*m*)] and [*b*(*n*)] based on the first information. For a specific implementation process of S803, refer to related content in the embodiment shown in FIG. 4. Details are not described again.

S804: The UE determines [*d*(*n*)(*m*)] based on [*a*(*m*)] and/or [*b*(*n*)].

For example, the UE may process [*c*(*n*)(*m*)] based on [*a*(*m*)], to obtain [*d*(*n*)(*m*)], where an element in [*d*(*n*)(*m*)] is *d*(*n*)(*m*)=*a*(*m*) × *c*(*n*)(*m*). For another example, the UE may process [*c*(*n*)(*m*)] based on [*b*(*n*)], to obtain [*d*(*n*)(*m*)]*,* where an element in [*d*(*n*)(*m*)] is *d*(*n*)(*m*)=*b*(*n*) × *c*(*n*)(*m*). For still another example, the UE may process [*c*(*n*)(*m*)] based on [*a*(*m*)] and [*b*(*n*)], to obtain [*d*(*n*)(*m*)], where an element in [*d*(*n*)(*m*)] is *d*(*n*)(*m*)=*a*(*m*) × *b*(*n*) × *c*(*n*)(*m*)*.*

S805: The UE generates a first signal based on [*d*(*n*)(*m*)].

S806: The UE sends the first signal.

S807: The base station receives an echo signal of the first signal.

For a specific implementation process of S805 to S807, correspondingly refer to content in S403 to S405. Details are not described again.

S808: The base station processes the echo signal of the first signal based on [*a*(*m*)] and/or [*b*(*n*)].

For example, the base station may process the echo signal of the first signal based on [*a*(*m*)] and/or [*b*(*n*)] determined in S801. For another example, the UE may send the first information to the base station. Correspondingly, the base station receives the first information from the UE, determines [*a*(*m*)] and/or [*b*(*n*)] based on the first information, and processes the echo signal of the first signal based on the determined [*a*(*m*)] and/or [*b*(*n*)]. For a specific implementation process of S808, refer to content in S406. Details are not described again.

In this application, the method provided in embodiments of this application is described from a perspective of interaction between a plurality of communication apparatuses, such as the first communication apparatus and the second communication apparatus. To implement the method provided in embodiments of this application, each of the foregoing communication apparatuses may include a hardware structure and/or a software module, and implement the foregoing functions in a form of the hardware structure, the software module, or a combination of the hardware structure and the software module.

The following describes a communication apparatus for implementing the foregoing methods in embodiments of this application with reference to the accompanying drawings. Therefore, all the foregoing content may be used in the following embodiments. Repeated content is not described again.

FIG. 9 is a diagram of a structure of a communication apparatus 900. The communication apparatus 900 may implement functions or steps implemented by the first communication apparatus or the second communication apparatus in the foregoing method embodiments.

In a possible implementation, the communication apparatus 900 may include a processing module 901 and a transceiver module 902. The processing module 901 may be configured to perform the steps of any communication apparatus (for example, the first communication apparatus or the second communication apparatus) in any one of the foregoing method embodiments. The transceiver module 902 may be configured to receive or send related data, information, or a message.

In another possible implementation, the communication apparatus 900 may include a transceiver module 902. The transceiver module 902 may be configured to perform steps or methods of any communication apparatus (for example, the first communication apparatus or the second communication apparatus) in any one of the foregoing method embodiments.

It should be noted that the foregoing units may be independently disposed, or may be partially or completely integrated. For example, the transceiver module 902 may include a sending module and a receiving module.

In an example, the communication apparatus 900 may implement functions or steps implemented by the first communication apparatus in any one of the foregoing method embodiments. For example, the processing module 901 may be configured to: determine a second symbol based on a first coefficient, where the first coefficient is used to process the second symbol; and generate a first signal based on the second symbol. The transceiver module 902 may be configured to send the first signal.

In a possible design, the first coefficient may be [*a*(*h*)], and the second symbol may be [*d*(*h*)]. Both [*a*(*h*)] and [*d*(*h*)] include H elements, *h* belongs to {1, ..., H}, and H is a positive integer.

In an optional implementation based on the foregoing design, an element in [*a*(*h*)] may satisfy a first feature, or may satisfy a second feature. The first feature may be: When *h* is less than *k, a*(*h*) is less than *a*(*h* + 1), or when *h* is greater than *k, a*(*h*) is less than or equal to *a*(*h* - 1). The second feature may be: When *h* is less than *k, a*(*h*) is greater than *a*(*h +* 1), or when *h* is greater than *k, a*(*h*) is greater than or equal to *a*(*h* - 1). *k* is a positive integer greater than 1 and less than H.

Optionally, when H is an odd number, *k* may be (H+1)/2; or when H is an even number, *k* may be H/2.

In an optional implementation based on the foregoing design, when determining the second symbol based on the first coefficient, the processing module 901 may be specifically configured to determine [*d*(*h*)] based on [*a*(*h*)]. For example, the processing module 901 may be configured to process [*c*(*h*)] based on [*a*(*h*)], to obtain [*d*(*h*)], where an element in [*d*(*h*)] is *d*(*h*)=*a*(*h*) × *c*(*h*).

In an optional implementation based on the foregoing design, the transceiver module 902 is further configured to receive first information, where the first information indicates [*a*(*h*)]; and/or send first information, where the first information indicates [*a*(*h*)]*.*

Optionally, the first information may indicate [*a*(*h*)] in the following manner: The first information includes a first field, and a state value of the first field indicates that the element in [*a*(*h*)] satisfies the first feature or satisfies the second feature.

In an optional implementation based on the foregoing design, the transceiver module 902 is further configured to receive an echo signal of the first signal. The processing module 901 is further configured to process the echo signal of the first signal.

In an optional implementation based on the foregoing design, the first signal may be in a first time period, and the processing module 901 is further configured to: determine [*f*(*h*)] based on [*e*(*h*)], where both [*e*(*h*)] and [*f*(*h*)] include H elements; and generate a second signal based on [*f*(*h*)]. The transceiver module 902 is further configured to send the second signal in a second time period following the first time period. When the element in [*a*(*h*)] satisfies the first feature, an element in [*e*(*h*)] satisfies: When h is less than *k*, *e*(*h*) is less than e(*h +* 1), or when *h* is greater than *k, e*(*h*) is less than or equal to *e*(*h -* 1). Alternatively, when the element in [*a*(*h*)] satisfies the second feature, an element in [*e*(*h*)] satisfies: When *h* is less than *k, e*(*h*) is greater than *e*(*h +* 1), or when *h* is greater than *k, e*(*h*) is greater than or equal to *e*(*h -* 1).

Optionally, the transceiver module 902 is further configured to receive the echo signal of the first signal and an echo signal of the second signal. The processing module 901 is further configured to process the echo signal of the first signal and the echo signal of the second signal.

In another possible design, the first coefficient may include [*a*(*m*)] and/or [*b*(*n*)]*,* and the second symbol may be [*d*(*n*)(*m*)]. [*a*(*m*)] includes M elements, [*b*(*n*)] includes N elements, and [*d*(*n*)(*m*)] includes *N* × *M* elements. *m* belongs to {1, ..., M}, and *n* belongs to {1, ..., N}. Both M and N are positive integers.

In an optional implementation based on the foregoing design, an element in [*a*(*m*)] may satisfy a third feature, or may satisfy a fourth feature. The third feature may be: When *m* is less than *i*, *a*(*m*) is less than *a*(*m* + 1), or when *m* is greater than *i, a*(*m*) is less than or equal to *a*(*m* - 1). The fourth feature may be: When *m* is less than *i, a*(*m*) is greater than *a*(*m* + 1), or when *m* is greater than *i*, *a*(*m*) is greater than or equal to *a*(*m -* 1). *i* is a positive integer greater than 1 and less than M.

Optionally, when M is an odd number, *i* may be (M+1)/2; or when M is an even number, *i* may be M/2.

In an optional implementation based on the foregoing design, an element in [*b*(*n*)] may satisfy a fifth feature, or may satisfy a sixth feature. The fifth feature may be: When *n* is less than *j, b*(*n*) is less than *b*(*n* + 1), or when *n* is greater than *j, b*(*n*) is less than or equal to *b*(*n* - 1). The sixth feature may be: When *n* is less than *j, b*(*n*) is greater than *b*(*n* + 1), or when *n* is greater than *j, b*(*n*) is greater than or equal to *b*(*n* - 1). *j* is a positive integer greater than 1 and less than N.

Optionally, when N is an odd number, *j* may be (N+1)/2; or when N is an even number, *j* may be N/2.

In an optional implementation based on the foregoing design, when determining the second symbol based on the first coefficient, the processing module 901 is specifically configured to: determine [*d*(*n*)(*m*)] based on [*a*(*m*)]. For example, the processing module 901 may be configured to process [*c*(*n*)(*m*)] based on [*a*(*m*)], to obtain [*d*(*n*)(*m*)], where an element in [*d*(*n*)(*m*)] is *d*(*n*)(*m*)=*a*(*m*) × *c*(*n*)(*m*).

Alternatively, determining the second symbol based on the first coefficient may be: The first communication apparatus determines [*d*(*n*)(*m*)] based on [*b*(*n*)]. For example, the processing module 901 may be configured to process [*c*(*n*)(*m*)] based on [*b*(*n*)], to obtain [*d*(*n*)(*m*)], where an element in [*d*(*n*)(*m*)] is *d*(*n*)(*m*)=*b*(*n*) × *c*(*n*)(*m*).

Alternatively, determining the second symbol based on the first coefficient may be: The first communication apparatus determines [*d*(*n*)(*m*)] based on [*a*(*m*)] and [*b*(*n*)]. For example, the processing module 901 may be configured to process [*c*(*n*)(*m*)] based on

[*a*(*m*)] and [*b*(*n*)], to obtain [*d*(*n*)(*m*)], where an element in [*d*(*n*)(*m*)] is *d*(*n*)(*m*)=*a*(*m*) × *b*(*n*) × *c*(*n*)(*m*).

In an optional implementation based on the foregoing design, the transceiver module 902 is further configured to receive first information, where the first information indicates [*a*(*m*)] and/or [*b*(*n*)]; and/or send first information, where the first information indicates [*a*(*m*)] and/or [*b*(*n*)]*.*

Optionally, the first information may indicate [*a*(*m*)] and/or [*b*(*n*)] in the following manner: The first information includes a second field and/or a third field, a state value of the second field indicates that the element in [*a*(*m*)] satisfies the third feature or satisfies the fourth feature, and a state value of the third field indicates that the element in [*b*(*n*)] satisfies the fifth feature or satisfies the sixth feature.

In an optional implementation based on the foregoing design, the first signal may be in a first time period, and the processing module 901 is further configured to: determine [*f*(*n*)*(m*)] based on [*e*(*m*)]*,* where [*e*(*m*)] includes M elements, and [*f*(*n*)*(m*)] includes *N* × *M* elements; and generate a second signal based on [*f*(*n*)(*m*)]. The transceiver module 902 is further configured to send the second signal in a second time period following the first time period. When the element in [*a*(*m*)] satisfies the third feature, an element in [*e*(*m*)] satisfies: When *m* is less than *i, e*(*m*) is less than *e*(*m* + 1), or when *m* is greater than *i, e*(*m*) is less than or equal to *e*(*m* - 1). Alternatively, when the element in [*a*(*m*)] satisfies the fourth feature, an element in [*e*(*m*)] satisfies: When *m* is less than *i, e*(*m*) is greater than *e*(*m* + 1), or when m is greater than *i, e*(*m*) is greater than or equal to *e*(*m* - 1).

Optionally, the transceiver module 902 is further configured to receive an echo signal of the first signal and an echo signal of the second signal. The processing module 901 is further configured to process the echo signal of the first signal and the echo signal of the second signal.

In another example, the communication apparatus 900 may implement functions or steps implemented by the second communication apparatus in any one of the foregoing method embodiments. For example, the transceiver module 902 may be configured to receive an echo signal of the first signal. The processing module 901 may be configured to process the echo signal of the first signal. The first signal is a signal generated based on the second symbol, and the second symbol is a symbol determined based on the first coefficient.

In a possible design, the first coefficient may be [*a*(*h*)], and the second symbol may be [*d*(*h*)]. Both [*a*(*h*)] and [*d*(*h*)] include H elements, *h* belongs to {1, ..., H}, and H is a positive integer. Correspondingly, the first signal may be a signal generated based on [*d*(*h*)], and [*d*(*h*)] is a symbol determined based on [*a*(*h*)]*.*

In an optional implementation based on the foregoing design, an element in [*a*(*h*)] may satisfy a first feature, or may satisfy a second feature. The first feature may be: When *h* is less than *k, a*(*h*) is less than *a*(*h* + 1), or when *h* is greater than *k, a*(*h*) is less than or equal to *a*(*h* - 1). The second feature may be: When *h* is less than *k, a*(*h*) is greater than *a*(*h +* 1), or when *h* is greater than *k, a*(*h*) is greater than or equal to *a*(*h* - 1). *k* is a positive integer greater than 1 and less than H.

Optionally, when H is an odd number, *k* may be (H+1)/2; or when H is an even number, *k* may be H/2.

In an optional implementation based on the foregoing design, [*d*(*h*)] may be a symbol obtained by processing [*c*(*h*)] based on [*a*(*h*)], where an element in [*d*(*h*)] is *d*(*h*)=*a*(*h*) × *c*(*h*). [*c*(*h*)] includes H elements.

In an optional implementation based on the foregoing design, the transceiver module 902 is further configured to receive first information, where the first information indicates [*a*(*h*)]; and the processing module 901 is further configured to determine [*a*(*h*)] based on the first information; and/or the transceiver module 902 is further configured to send first information, where the first information indicates [*a*(*h*)]*.*

Optionally, the first information may indicate [*a*(*h*)] in the following manner: The first information includes a first field, and a state value of the first field indicates that the element in [*a*(*h*)] satisfies the first feature or satisfies the second feature.

In an optional implementation based on the foregoing design, the first signal may be in a first time period, and the transceiver module 902 is further configured to receive an echo signal of a second signal, where the second signal is in a second time period following the first time period, the second signal is generated based on [*f*(*h*)], an element in [*f*(*h*)] is *f*(*h*)=*e*(*h)* × *g*(*h*), *e*(*h*) belongs to [*e*(*h*)], *g*(*h*) belongs to [*g*(*h*)], and [*e*(*h*)], [*g*(*h*)], and [*f*(*h*)] each include H elements. Further, when processing the echo signal of the first signal, the processing module 901 is specifically configured to process the echo signal of the first signal and the echo signal of the second signal. When the element in [*a*(*h*)] satisfies the first feature, an element in [*e*(*h*)] satisfies: When *h* is less than *k, e*(*h*) is less than *e*(*h +* 1), or when *h* is greater than *k, e*(*h*) is less than or equal to *e*(*h -* 1). Alternatively, when the element in [*a*(*h*)] satisfies the second feature, an element in [*e*(*h*)] satisfies: When *h* is less than *k, e*(*h*) is greater than *e*(*h +* 1), or when *h* is greater than *k, e*(*h*) is greater than or equal to *e*(*h -* 1).

In another possible design, the first coefficient may include [*a*(*m*)] and/or [*b*(*n*)], and the second symbol may be [*d*(*n*)(*m*)]. [*a*(*m*)] includes M elements, [*b*(*n*)] includes N elements, and [*d*(*n*)(*m*)] includes *N* × *M* elements. *m* belongs to {1, ..., M}, and *n* belongs to {1, ..., N}. Both M and N are positive integers. Correspondingly, the first signal may be a signal generated based on [*d*(*n*)(*m*)], and [*d*(*n*)(*m*)] is a symbol determined based on [*a*(*m*)] and/or [*b*(*n*)].

In an optional implementation based on the foregoing design, an element in [*a*(*m*)] may satisfy a third feature, or may satisfy a fourth feature. The third feature may be: When *m* is less than *i*, *a*(*m*) is less than *a*(*m* + 1), or when *m* is greater than *i,* a(*m*) is less than or equal to *a*(*m* - 1). The fourth feature may be: When *m* is less than *i, a*(*m*) is greater than *a*(*m* + 1), or when *m* is greater than *i*, *a*(*m*) is greater than or equal to *a*(*m* - 1). *i* is a positive integer greater than 1 and less than M.

Optionally, when M is an odd number, *i* may be (M+1)/2; or when M is an even number, *i* may be M/2.

In an optional implementation based on the foregoing design, an element in [*b*(*n*)] may satisfy a fifth feature, or may satisfy a sixth feature. The fifth feature may be: When *n* is less than *j, b*(*n*) is less than *b*(*n* + 1), or when *n* is greater than *j, b*(*n*) is less than or equal to *b*(*n* - 1). The sixth feature may be: When *n* is less than *j, b*(*n*) is greater than *b*(*n* + 1), or when *n* is greater than *j, b*(*n*) is greater than or equal to *b*(*n* - 1). *j* is a positive integer greater than 1 and less than N.

Optionally, when N is an odd number, *j* may be (N+1)/2; or when N is an even number, *j* may be N/2.

In an optional implementation based on the foregoing design, [*d*(*n*)(*m*)] is a symbol determined based on [*a*(*m*)]. For example, [*d*(*n*)(*m*)] is a symbol obtained by processing [*c*(*n*)(*m*)] based on [*a*(*m*)], where an element in [*d*(*n*)(*m*)] is *d*(*n*)(*m*)=*a*(*m*) × *c*(*n*)(*m*).

Alternatively, [*d*(*n*)(*m*)] is a symbol determined based on [*b*(*n*)]. For example, [*d*(*n*)(*m*)] is a symbol obtained by processing [*c*(*n*)(*m*)] based on [*b*(*n*)], where an element in [*d*(*n*)(*m*)] is *d*(*n*)(*m*)=*b*(*n*) × *c*(*n*)(*m*).

Alternatively, [*d*(*n*)(*m*)] is a symbol determined based on [*a*(*m*)] and [*b*(*n*)]. For example, [*d*(*n*)(*m*)] is a symbol obtained by processing [*c*(*n*)(*m*)] based on [*a*(*m*)] and [*b*(*n*)], where an element in [*d*(*n*)(*m*)] is *d*(*n*)(*m*)=*a*(*m*) × *b*(*n*) × *c*(*n*)(*m*).

In an optional implementation based on the foregoing design, the transceiver module 902 is further configured to receive first information, where the first information indicates [*a*(*m*)]. The processing module 901 is further configured to determine [*a*(*m*)] based on the first information. Alternatively, the transceiver module 902 is further configured to receive first information, where the first information indicates [*b*(*n*)]. The processing module 901 is further configured to determine [*b*(*n*)] based on the first information. Alternatively, the transceiver module 902 is further configured to receive first information, where the first information indicates [*a*(*m*)] and [*b*(*n*)]. The processing module 901 is further configured to determine [*a*(*m*)] and [*b*(*n*)] based on the first information. Alternatively, the transceiver module 902 is further configured to send first information, where the first information indicates [*a*(*m*)] and/or [*b*(*n*)].

Optionally, the first information may indicate [*a*(*m*)] and/or [*b*(*n*)] in the following manner: The first information includes a second field and/or a third field, a state value of the second field indicates that the element in [*a*(*m*)] satisfies the third feature or satisfies the fourth feature, and a state value of the third field indicates that the element in [*b*(*n*)] satisfies the fifth feature or satisfies the sixth feature.

In an optional implementation based on the foregoing design, the first signal may be in a first time period, and the transceiver module 902 is further configured to receive an echo signal of a second signal, where the second signal is in a second time period following the first time period, the second signal is generated based on [*f*(*n*)(*m*)], an element *f*(*n*)(*m*) in [*f*(*n*)(*m*)] satisfies *e*(*m*) × *g*(*n*)(*m*) or satisfies *e*(*m*) × *q*(*n*) × *g*(*n*)(*m*), *e*(*m*) belongs to [*e*(*m*)], *q*(*n*) belongs to [*q*(*n*)], *g*(*n*)(*m*) belongs to [*g*(*n*)(*m*)], [*e*(*m*)] includes M elements, [*q*(*n*)] includes N elements, and both [*f*(*n*)(*m*)] and [*g*(*n*)*(m*)] include *N* × *M* elements. Further, when processing the echo signal of the first signal, the processing module 901 is specifically configured to process the echo signal of the first signal and the echo signal of the second signal. When the element in [*a*(*m*)] satisfies the third feature, an element in [*e*(*m*)] satisfies: When *m* is less than *i*, *e*(*m*) is less than *e*(*m* + 1), or when *m* is greater than *i*, *e*(*m*) is less than or equal to *e*(*m* - 1). Alternatively, when the element in [*a*(m)] satisfies the fourth feature, an element in [*e*(*m*)] satisfies: When *m* is less than *i, e*(*m*) is greater than *e*(*m* + 1), or when m is greater than *i, e*(*m*) is greater than or equal to *e*(*m* - 1).

For more detailed descriptions of the processing module 901 and the transceiver module 902, directly refer to related descriptions in the method embodiment shown in any one of FIG. 4 to FIG. 8. Details are not described herein again.

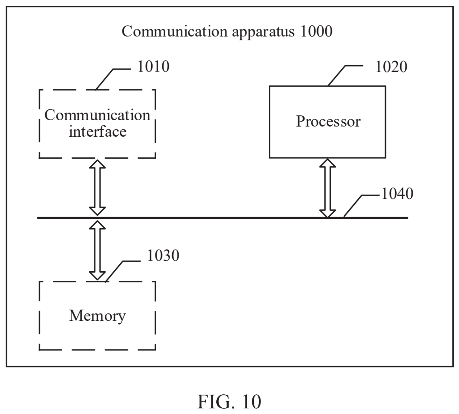

As shown in FIG. 10, an embodiment of this application provides a diagram of a structure of a communication apparatus 1000. The communication apparatus 1000 may include a processor 1020, configured to implement or support the communication apparatus 1000 in implementing a function of the first communication apparatus or the second communication apparatus in any method embodiment of this application. For details, refer to the detailed descriptions in the foregoing method embodiments. Details are not described herein again. For example, the processor 1020 is configured to read and execute program instructions through a communication interface, to cause the communication apparatus 1000 to implement a corresponding method. The processor 1020 may include one or more processors. This is not limited.

Specifically, the communication apparatus 1000 may be the first communication apparatus or a functional module located in the first communication apparatus, and can implement a function of the first communication apparatus in any method embodiment of this application. Alternatively, the communication apparatus 1000 may be the second communication apparatus or a functional module located in the second communication apparatus, and can implement a function of the second communication apparatus in any method embodiment of this application.

It should be noted that the foregoing functional modules may be implemented by hardware, or may be implemented by a combination of hardware and software. This is not limited.

For example, the communication apparatus 1000 may be a chip system. The chip system may include a chip, or may include a chip and another discrete component. This is not limited.

Optionally, the communication apparatus 1000 may further include a memory 1030, configured to store program instructions and/or data. The memory 1030 is coupled to the processor 1020. The coupling may be understood as an indirect coupling or a communication connection between apparatuses, units, or modules, may be in an electrical form, a mechanical form, or another form, and is used for information exchange between the apparatuses, the units, or the modules. The processor 1020 may operate in collaboration with the memory 1030. The memory 1030 may include one or more memories. This is not limited.

Further, the processor 1020 is configured to execute the program instructions stored in the memory 1030, to cause the communication apparatus 1000 to implement a corresponding method.

The one or more memories in the memory 1030 may be included in the processor, or the memory 1030 may exist independently, for example, an off-chip memory, and is connected to the processor 1020 through a communication bus (represented by a bold line 1040 in FIG. 10). Alternatively, the memory 1030 and the processor 1020 may be integrated together.

Optionally, the communication apparatus 1000 further includes a communication interface 1010 (represented by a dashed line in FIG. 10), configured to communicate with another device through a transmission medium, so that an apparatus used in the communication apparatus 1000 can communicate with the another device. For example, when the communication apparatus is the first communication apparatus, the another device may be the second communication apparatus or the like. The processor 1020 may receive and send data through the communication interface 1010.

The communication interface 1010 may be specifically a transceiver. In hardware implementation, the transceiver may be configured to implement a function of the transceiver module 1402, and the transceiver is integrated into the communication apparatus 1000 to form the communication interface 1010.

It should be noted that, a specific connection medium between the communication interface 1010, the processor 1020, and the memory 1030 is not limited in this embodiment of this application. In FIG. 10, the memory 1030, the processor 1020, and the communication interface 1010 are connected through the communication bus 1040. A connection manner between other components is only schematically described, and is not limited thereto. The communication bus 1040 may be classified into an address bus, a data bus, a control bus, and the like. For ease of representation, only one bold line is used to represent the communication bus in FIG. 10, but this does not mean that there is only one communication bus or only one type of communication bus.

The processor 1020 in this embodiment of this application may be a general-purpose processor, a digital signal processor, an application-specific integrated circuit, a field programmable gate array or another programmable logic device, a discrete gate or a transistor logic device, or a discrete hardware component. The general-purpose processor may be a microprocessor, any conventional processor, or the like. The method disclosed with reference to embodiments of this application may be performed and completed by hardware in the processor, or may be performed and completed by a combination of hardware and software in the processor.

In this embodiment of this application, the memory 1030 may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory may alternatively be any other medium that is configured to carry or store program code in a form of instructions or a data structure and that can be accessed by a computer; or may be a circuit or any other apparatus that can implement a storage function, and is configured to store program instructions and/or data.

An embodiment of this application further provides a communication system. The communication system may include one or more of the following: a first communication apparatus or a second communication apparatus. Optionally, the communication system may further include a third communication apparatus.

For the first communication apparatus, the second communication apparatus, or the third communication apparatus, refer to the descriptions in the foregoing method embodiments. Details are not described again.

An embodiment of this application further provides a computer-readable storage medium, including program instructions. When the program instructions are run on a computer, the computer is caused to perform the method or steps of any communication apparatus (for example, the first communication apparatus or the second communication apparatus) in the foregoing embodiments.

An embodiment of this application further provides a computer program product, including program instructions. When the program instructions are run on a computer, the computer is caused to perform the method or steps of any communication apparatus (for example, the first communication apparatus or the second communication apparatus) in the foregoing embodiments.

An embodiment of this application provides a chip system. The chip system includes a processor, configured to implement a function of the first communication apparatus or the second communication apparatus in the foregoing method (for example, performing a corresponding method or corresponding steps). The chip system may include a chip, or may include a chip and another discrete component.

Optionally, the chip system further includes a memory. The memory is configured to store program instructions, to cause the processor to read and execute the program instructions, so as to implement a corresponding method.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In several embodiments provided in this application, it should be understood that the disclosed systems, apparatuses, and methods may be implemented in other manners. For example, the described apparatus embodiments are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one position, or may be distributed on a plurality of network units. Some or all of the units may be selected based on actual requirements to achieve objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or a contributing part, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method comprises:
determining [*d*(*h*)] based on [*a*(*h*)], wherein both [*a*(*h*)] and [*d*(*h*)] comprise H elements, *h* belongs to {1, ..., H}, and H is a positive integer; and
generating a first signal based on [*d*(*h*)], and sending the first signal, wherein
an element in [*a*(*h*)] satisfies a first feature or satisfies a second feature, wherein the first feature is: when *h* is less than *k, a*(*h*) is less than *a*(*h* + 1), or when *h* is greater than *k, a*(*h*) is less than or equal to *a*(*h* - 1); the second feature is: when *h* is less than *k, a*(*h*) is greater than *a*(*h +* 1), or when *h* is greater than *k, a*(*h*) is greater than or equal to *a*(*h -* 1); and *k* is a positive integer greater than 1 and less than H.

2. The method according to claim 1, wherein the determining [*d*(*h*)] based on [*a*(*h*)] comprises:
processing [*c*(*h*)] based on [*a*(*h*)], to obtain [*d*(*h*)], wherein [*c*(*h*)] comprises H elements, and an element in [*d*(*h*)] is *d*(*h*)=*a*(*h*) × *c*(*h*).

3. The method according to claim 1 or 2, wherein the method further comprises:
sending or receiving first information, wherein the first information indicates [*a*(*h*)]*.*

4. The method according to any one of claims 1 to 3, wherein the first signal is a sensing signal.

5. The method according to any one of claims 1 to 4, wherein the first signal is in a first time period, and the method further comprises:
determining [*f*(*h*)] based on [*e*(*h*)], wherein both [*e*(*h*)] and [*f*(*h*)] comprise H elements; and
generating a second signal based on [*f*(*h*)], and sending the second signal in a second time period following the first time period, wherein
when the element in [*a*(*h*)] satisfies the first feature, an element in [*e*(*h*)] satisfies: when *h* is less than *k, e*(*h*) is less than *e*(*h +* 1), or when *h* is greater than *k, e*(*h*) is less than or equal to *e*(*h -* 1); or when the element in [*a*(*h*)] satisfies the second feature, an element in [*e*(*h*)] satisfies: when *h* is less than *k, e*(*h*) is greater than *e*(*h +* 1), or when *h* is greater than *k, e*(*h*) is greater than or equal to *e*(*h -* 1).

6. A communication method, wherein the method comprises:
determining [*d*(*n*)(*m*)] based on [*a*(*m*)], wherein [*a*(*m*)] comprises M elements, [*d*(*n*)(*m*)] comprises *N* × *M* elements, m belongs to {1, ..., M}, *n* belongs to {1, ..., N}, and both M and N are positive integers; and
generating a first signal based on [*d*(*n*)(*m*)], and sending the first signal, wherein
an element in [*a*(*m*)] satisfies a third feature or satisfies a fourth feature, wherein the third feature is: when *m* is less than *i,* a(*m*) is less than *a*(*m* + 1), or when m is greater than *i*, *a*(*m*) is less than or equal to *a*(*m* - 1); the fourth feature is: when *m* is less than *i,* a(*m*) is greater than *a*(*m* + 1), or when *m* is greater than *i*, *a*(*m*) is greater than or equal to *a*(*m* - 1); and *i* is a positive integer greater than 1 and less than M.

7. The method according to claim 6, wherein the determining [*d*(*n*)(*m*)] based on [*a*(*m*)] comprises:
processing [*c*(*n*)(*m*)] based on [*a*(*m*)] , to obtain [*d*(*n*)(*m*)], wherein [*c*(*n*)(*m*)] comprises *N* × *M* elements, and an element in [*d*(*n*)(*m*)] is *d*(*n*)(*m*)=*a*(*m*) × *c*(*n*)(*m*)*.*

8. The method according to claim 6 or 7, wherein the determining [*d*(*n*)*(m*)] based on [*a*(*m*)] comprises:
determining [*d*(*n*)(*m*)] based on [*a*(*m*)] and [*b*(*n*)], wherein [*b*(*n*)] comprises N elements, and an element in [*b*(*n*)] satisfies a fifth feature or satisfies a sixth feature, wherein the fifth feature is: when *n* is less than *j, b*(*n*) is less than *b*(*n* + 1), or when *n* is greater than *j, b*(*n*) is less than or equal to *b*(*n* - 1); the sixth feature is: when *n* is less than *j, b*(*n*) is greater than *b*(*n* + 1), or when *n* is greater than *j, b*(*n*) is greater than or equal to *b*(*n* - 1); and *j* is a positive integer greater than 1 and less than N.

9. The method according to claim 8, wherein the determining [*d*(*n*)(*m*)] based on [*a*(*m*)] and [*b*(*n*)] comprises:
processing [*c*(*n*)(*m*)] based on [*a*(*m*)] and [*b*(*n*)] , to obtain [*d*(*n*)(*m*)], wherein [*c*(*n*)(*m*)] comprises *N* × *M* elements, and an element in [*d*(*n*)(*m*)] is *d*(*n*)(*m*)=*a*(*m*) × *b*(*n*) × *c*(*n*)(*m*).

10. The method according to any one of claims 6 to 9, wherein the method further comprises:
sending or receiving first information, wherein the first information indicates [*a*(*m*)] and/ or [*b*(*n*)].

11. The method according to any one of claims 6 to 10, wherein the first signal is a sensing signal.

12. The method according to any one of claims 6 to 11, wherein the first signal is in a first time period, and the method further comprises:
determining [*f*(*n*)*(m*)] based on [*e*(*m*)], wherein [*e*(*m*)] comprises M elements, and [*f*(*n*)*(m*)] comprises *N* × *M* elements; and
generating a second signal based on [*f*(*n*)*(m*)], and sending the second signal in a second time period following the first time period, wherein
when the element in [*a*(*m*)] satisfies the third feature, an element in [*e*(*m*)] satisfies: when *m* is less than *i, e*(*m*) is less than *e*(*m* + 1), or when *m* is greater than *i*, *e*(*m*) is less than or equal to *e*(*m* - 1); or when the element in [*a*(*m*)] satisfies the fourth feature, an element in [*e*(*m*)] satisfies: when *m* is less than *i*, *e*(*m*) is greater than *e*(*m* + 1), or when m is greater than *i*, *e*(*m*) is greater than or equal to *e*(*m* - 1).

13. A communication method, wherein the method comprises:
receiving an echo signal of a first signal, and processing the echo signal of the first signal, wherein the first signal is generated based on [*d*(*h*)], an element in [*d*(*h*)] is *d*(*h*)=*a*(*h*) × *c*(*h*), *a*(*h*) belongs to [*a*(*h*)], *c*(*h*) belongs to [*c*(*h*)], [*a*(*h*)], [*c*(*h*)], and [*d*(*h*)] each comprise H elements, *h* belongs to {1, ..., H}, and H is a positive integer, wherein
an element in [*a*(*h*)] satisfies a first feature or satisfies a second feature, wherein the first feature is: when *h* is less than *k, a*(*h*) is less than *a*(*h* + 1), or when *h* is greater than *k, a*(*h*) is less than or equal to *a*(*h* - 1); the second feature is: when *h* is less than *k, a*(*h*) is greater than *a*(*h +* 1), or when *h* is greater than *k, a*(*h*) is greater than or equal to *a*(*h -* 1); and *k* is a positive integer greater than 1 and less than H.

14. The method according to claim 13, wherein the method further comprises:
receiving first information, wherein the first information indicates [*a*(*h*)]; and
determining [*a*(*h*)] based on the first information.

15. The method according to claim 13, wherein the method further comprises:
sending first information, wherein the first information indicates [*a*(*h*)]*.*

16. The method according to any one of claims 13 to 15, wherein the first signal is in a first time period, and the method further comprises:
receiving an echo signal of a second signal, wherein the second signal is in a second time period following the first time period, the second signal is generated based on [*f(h*)], an element in [*f*(*h*)] is *f*(*h*)=*e*(*h*) × *g*(*h*), *e*(*h*) belongs to [*e*(*h*)], *g*(*h*) belongs to [*g*(*h*)], and [*e*(*h*)], [*g*(*h*)], and [*f*(*h*)] each comprise H elements, wherein
the processing the echo signal of the first signal comprises:
processing the echo signal of the first signal and the echo signal of the second signal, wherein
when the element in [*a*(*h*)] satisfies the first feature, an element in [*e*(*h*)] satisfies: when *h* is less than *k, e*(*h*) is less than *e*(*h +* 1), or when *h* is greater than *k, e*(*h*) is less than or equal to *e*(*h -* 1); or when the element in [*a*(*h*)] satisfies the second feature, an element in [*e*(*h*)] satisfies: when *h* is less than *k, e*(*h*) is greater than *e*(*h +* 1), or when *h* is greater than *k, e*(*h*) is greater than or equal to *e*(*h -* 1).

17. A communication method, wherein the method comprises:
receiving an echo signal of a first signal, and processing the echo signal of the first signal, wherein the first signal is generated based on [*d*(*n*)(*m*)], an element *d*(*n*)(*m*) in [*d*(*n*)(*m*)] satisfies *a*(*m*) × *c*(*n*)(*m*) or satisfies *a*(*m*) × *b*(*n*) × *c*(*n*)(*m*), *a*(*m*) belongs to [*a*(*m*)], *b*(*n*) belongs to [*b*(*n*)], *c*(*n*)(*m*) belongs to [*c*(*n*)(*m*)], [*a*(*m*)] comprises M elements, [*b*(*n*)] comprises N elements, both [*c*(*n*)(*m*)] and [*d*(*n*)(*m*)] comprise *N* × *M* elements, *m* belongs to {1, ..., M}, *n* belongs to {1, ..., N}, and both M and N are positive integers, wherein
an element in [*a*(*m*)] satisfies a third feature or satisfies a fourth feature, wherein the third feature is: when *m* is less than *i, a*(*m*) is less than *a*(*m* + 1), or when *m* is greater than *i*, *a*(*m*) is less than or equal to *a*(*m* - 1); and the fourth feature is: when *m* is less than *i, a*(*m*) is greater than *a*(*m* + 1), or when m is greater than *i*, *a*(*m*) is greater than or equal to *a*(*m-*1);
an element in [*b*(*n*)] satisfies a fifth feature or satisfies a sixth feature, wherein the fifth feature is: when *n* is less than *j, b*(*n*) is less than *b*(*n* + 1), or when *n* is greater than *j, b*(*n*) is less than or equal to *b*(*n* - 1); and the sixth feature is: when *n* is less than *j, b*(*n*) is greater than *b*(*n* + 1), or when *n* is greater than *j, b*(*n*) is greater than or equal to *b*(*n* - 1); and
*i* is a positive integer greater than 1 and less than M, and *j* is a positive integer greater than 1 and less than N.

18. The method according to claim 17, wherein the method further comprises:
receiving first information, wherein the first information indicates [*a*(*m*)] and/or [*b*(*n*)]; and
determining [*a*(*m*)] and/or [*b*(*n*)] based on the first information.

19. The method according to claim 17, wherein the method further comprises:
sending first information, wherein the first information indicates [*a*(*m*)] and/or [*b*(*n*)].

20. The method according to any one of claims 17 to 19, wherein the first signal is in a first time period, and the method further comprises:
receiving an echo signal of a second signal, wherein the second signal is in a second time period following the first time period, the second signal is generated based on [*f*(*n*)*(m*)], an element *f*(*n*)(*m*) in [*f*(*n*)*(m*)] satisfies *e*(*m*) × *g*(*n*)(*m*) or satisfies *e*(*m*) × *q*(*n*) × *g*(*n*)(*m*), *e*(*m*) belongs to [*e*(*m*)], *q*(*n*) belongs to [*q*(*n*)], *g*(*n*)(*m*) belongs to [*g*(*n*)(*m*)], [*e*(*m*)] comprises M elements, [*q*(*n*)] comprises N elements, and both [*f*(*n*)(*m*)] and [*g*(*n*)(*m*)] comprise *N* × *M* elements, wherein
the processing the echo signal of the first signal comprises:
processing the echo signal of the first signal and the echo signal of the second signal, wherein
when the element in [*a*(*m*)] satisfies the third feature, an element in [*e*(*m*)] satisfies: when *m* is less than *i, e*(*m*) is less than *e*(*m* + 1), or when m is greater than *i*, *e*(*m*) is less than or equal to *e*(*m* - 1); or when the element in [*a*(*m*)] satisfies the fourth feature, an element in *[e(m)]* satisfies: when m is less than i, *e(m)* is greater than *e*(*m +* 1), or when m is greater than *i, e(m)* is greater than or equal to *e(m* - 1).

21. A communication apparatus, wherein the apparatus comprises a processing module and a transceiver module, wherein
the processing module is configured to: determine [*d*(*h*)] based on [*a*(*h*)]*,* and generate a first signal based on [*d*(*h*)]*,* wherein both [*a*(*h*)] and [*d*(*h*)] comprise H elements, *h* belongs to {1, ..., H}, and H is a positive integer; and
the transceiver module is configured to send the first signal, wherein
an element in [*a*(*h*)] satisfies a first feature or satisfies a second feature, wherein the first feature is: when *h* is less than *k, a*(*h*) is less than *a*(*h* + 1), or when *h* is greater than *k, a*(*h*) is less than or equal to *a*(*h* - 1); the second feature is: when *h* is less than *k, a*(*h*) is greater than *a*(*h +* 1), or when *h* is greater than *k, a*(*h*) is greater than or equal to *a*(*h -* 1); and k is a positive integer greater than 1 and less than H.

22. The apparatus according to claim 21, wherein when determining [*d*(*h*)] based on [*a*(*h*)]*,* the processing module is specifically configured to:
process [*c*(*h*)] based on [*a*(*h*)]*,* to obtain [*d*(*h*)]*,* wherein [*c*(*h*)] comprises H elements, and an element in [*d*(*h*)] is *d*(*h*)*=a*(*h*) × *c*(*h*)*.*

23. The apparatus according to claim 21 or 22, wherein the transceiver module is further configured to:
send or receive first information, wherein the first information indicates [*a*(*h*)]*.*

24. The apparatus according to any one of claims 21 to 23, wherein the first signal is a sensing signal.

25. The apparatus according to any one of claims 21 to 24, wherein the first signal is in a first time period;
the processing module is further configured to: determine [*f*(*h*)] based on [*e*(*h*)]*,* and generate a second signal based on [*f*(*h*)]*,* wherein both [*e*(*h*)] and [*f*(*h*)] comprise H elements; and
the transceiver module is further configured to send the second signal in a second time period following the first time period, wherein
when the element in [*a*(*h*)] satisfies the first feature, an element in [*e*(*h*)] satisfies: when *h* is less than *k, e*(*h*) is less than *e*(*h +* 1), or when *h* is greater than *k, e*(*h*) is less than or equal to *e(h -* 1); or when the element in [*a*(*h*)] satisfies the second feature, an element in [*e*(*h*)] satisfies: when *h* is less than *k, e*(*h*) is greater than *e*(*h +* 1), or when *h* is greater than *k, e*(*h*) is greater than or equal to *e*(*h -* 1).

26. A communication apparatus, wherein the apparatus comprises a processing module and a transceiver module, wherein
the processing module is configured to: determine [*d*(*n*)(*m*)] based on [*a*(*m*)]*,* and generate a first signal based on [*d*(*n*)(*m*)]*,* wherein [*a*(*m*)] comprises M elements, [*d*(*n*)(*m*)] comprises *N* × *M* elements, m belongs to {1, ..., M}, *n* belongs to {1, ..., N}, and both M and N are positive integers; and
the transceiver module is configured to send the first signal, wherein
an element in [*a*(*m*)] satisfies a third feature or satisfies a fourth feature, wherein the third feature is: when m is less than *i, a*(*m*) is less than *a*(*m* + 1), or when m is greater than i, *a*(*m*) is less than or equal to *a*(*m* - 1); the fourth feature is: when m is less than *i, a*(*m*) is greater than *a*(*m* + 1), or when m is greater than i, *a*(*m*) is greater than or equal to *a*(*m* - 1); and i is a positive integer greater than 1 and less than M.

27. The apparatus according to claim 26, wherein when determining *[d(n)(m)]* based on [*a*(*m*)]*,* the processing module is specifically configured to:
process [*c*(*n*)(*m*)] based on [*a*(*m*)] , to obtain [*d*(*n*)(*m*)] , wherein [*c*(*n*)(*m*)] comprises *N* × *M* elements, and an element in [*d*(*n*)(*m*)] is *d*(*n*)(*m*)=*a*(*m*) × *c*(*n*)(*m*)*.*

28. The apparatus according to claim 26 or 27, wherein when determining [*d*(*n*)(*m*)] based on [*a*(*m*)]*,* the processing module is specifically configured to:
determine [*d*(*n*)(*m*)] based on [*a*(*m*)] and [*b*(*n*)] , wherein [*b*(*n*)] comprises N elements, and an element in [b(n)] satisfies a fifth feature or satisfies a sixth feature, wherein the fifth feature is: when *n* is less than *j, b*(*n*) is less than *b*(*n +* 1), or when *n* is greater than *j, b*(*n*) is less than or equal to *b*(*n* - 1); the sixth feature is: when *n* is less than *j, b*(*n*) is greater than *b*(*n* + 1), or when *n* is greater than *j, b*(*n*) is greater than or equal to *b*(*n* - 1); and *j* is a positive integer greater than 1 and less than N.

29. The apparatus according to claim 28, wherein when determining [*d*(*n*)(*m*)] based on [*a*(*m*)] and [*b*(*n*)]*,* the processing module is specifically configured to:
process [*c*(*n*)(*m*)] based on [*a*(*m*)] and [*b*(*n*)] , to obtain [*d*(*n*)(*m*)] , wherein [*c*(*n*)(*m*)] comprises *N* × *M* elements, and an element in [*d*(*n*)(*m*)] is *d*(*n*)(*m*)*=a*(*m*) × *b*(*n*) × *c*(*n*)(*m*)*.*

30. The apparatus according to any one of claims 26 to 29, wherein the transceiver module is further configured to:
send or receive first information, wherein the first information indicates [*a*(*m*)] and/ or [*b*(*n*)].

31. The apparatus according to any one of claims 26 to 30, wherein the first signal is a sensing signal.

32. The apparatus according to any one of claims 26 to 31, wherein the first signal is in a first time period;
the processing module is further configured to: determine [*f*(*n*)(*m*)] based on [*e*(*m*)]*,* and
generate a second signal based on [*f*(*n*)(*m*)]*,* wherein [*e*(*m*)] comprises M elements, and [*f*(*n*)(*m*)] comprises *N* × *M* elements; and
the transceiver module is further configured to send the second signal in a second time period following the first time period, wherein
when the element in [*a*(*m*)] satisfies the third feature, an element in [*e*(*m*)] satisfies: when *m* is less than *i, e*(*m*) is less than *e*(*m* + 1), or when *m* is greater than *i*, *e*(*m*) is less than or equal to *e*(*m* - 1); or when the element in [*a*(*m*)] satisfies the fourth feature, an element in [*e*(*m*)] satisfies: when m is less than *i*, *e*(*m*) is greater than *e*(*m* + 1), or when m is greater than *i, e*(*m*) is greater than or equal to *e*(*m* - 1).

33. A communication apparatus, wherein the apparatus comprises a processing module and a transceiver module, wherein
the transceiver module is configured to receive an echo signal of a first signal; and
the processing module is configured to process the echo signal of the first signal, wherein
the first signal is generated based on [*d*(*h*)]*,* an element in [*d*(*h*)] is *d*(*h*)*=a*(*h*) × *c*(*h*)*, a*(*h*) belongs to [*a*(*h*)]*, c*(*h*) belongs to [*c*(*h*)]*,* [*a*(*h*)]*,* [*c*(*h*)]*,* and [*d*(*h*)] each comprise H elements, *h* belongs to {1, ..., H}, and H is a positive integer, wherein
an element in [*a*(*h*)] satisfies a first feature or satisfies a second feature, wherein the first feature is: when *h* is less than *k, a*(*h*) is less than *a*(*h* + 1), or when *h* is greater than *k, a*(*h*) is less than or equal to *a*(*h* - 1); the second feature is: when *h* is less than *k, a*(*h*) is greater than *a*(*h +* 1), or when *h* is greater than *k, a*(*h*) is greater than or equal to *a*(*h -* 1); and *k* is a positive integer greater than 1 and less than H.

34. The apparatus according to claim 33, wherein
the transceiver module is further configured to receive first information, wherein the first information indicates [*a*(*h*)]; and
the processing module is further configured to determine [*a*(*h*)] based on the first information.

35. The apparatus according to claim 33, wherein the transceiver module is further configured to:
send first information, wherein the first information indicates [*a*(*h*)].

36. The apparatus according to any one of claims 33 to 35, wherein the first signal is in a first time period, and the transceiver module is further configured to:
receive an echo signal of a second signal, wherein the second signal is in a second time period following the first time period, the second signal is generated based on [*f*(*h*)]*,* an element in [*f*(*h*)] is *f*(*h*)*=e*(*h*) × *g*(*h*)*, e*(*h*) belongs to [*e*(*h*)], *g*(*h*) belongs to [*g*(*h*)]*,* and [*e*(*h*)]*,* [*g*(*h*)]*,* and [*f*(*h*)] each comprise H elements, wherein
when processing the echo signal of the first signal, the processing module is specifically configured to:
process the echo signal of the first signal and the echo signal of the second signal, wherein
when the element in [*a*(*h*)] satisfies the first feature, an element in [*e*(*h*)] satisfies: when *h* is less than *k, e*(*h*) is less than *e*(*h +* 1), or when *h* is greater than *k, e*(*h*) is less than or equal to *e*(*h -* 1); or when the element in [*a*(*h*)] satisfies the second feature, an element in [*e*(*h*)] satisfies: when *h* is less than *k, e*(*h*) is greater than *e*(*h +* 1), or when *h* is greater than *k, e*(*h*) is greater than or equal to *e*(*h -* 1).

37. A communication apparatus, wherein the apparatus comprises a processing module and a transceiver module, wherein
the transceiver module is configured to receive an echo signal of a first signal; and
the processing module is configured to process the echo signal of the first signal, wherein
the first signal is generated based on [*d*(*n*)(*m*)]*,* and an element *d*(*n*)(*m*) in [*d*(*n*)(*m*)] satisfies *a*(*m*) × *c(n)(m)* or satisfies *a*(*m*) × *b*(*n*) × *c*(*n*)(*m*)*,* wherein *a*(*m*) belongs to [*a*(*m*)]*, b*(*n*) belongs to [*b*(*n*)]*, c*(*n*)(*m*) belongs to [*c*(*n*)(*m*)]*,* [*a*(*m*)] comprises M elements, [*b*(*n*)] comprises N elements, both [*c*(*n*)(*m*)] and [*d*(*n*)(*m*)] comprise *N* × *M* elements, m belongs to {1, ..., M}, *n* belongs to {1, ..., N}, and both M and N are positive integers;
an element in [*a*(*m*)] satisfies a third feature or satisfies a fourth feature, wherein the third feature is: when *m* is less than *i, a*(*m*) is less than *a*(*m* + 1), or when *m* is greater than i, *a*(*m*) is less than or equal to *a*(*m* - 1); and the fourth feature is: when *m* is less than *i, a*(*m*) is greater than *a*(*m* + 1), or when *m* is greater than *i, a*(*m*) is greater than or equal to *a*(*m -* 1);
an element in [*b*(*n*)] satisfies a fifth feature or satisfies a sixth feature, wherein the fifth feature is: when *n* is less than *j, b*(*n*) is less than *b*(*n* + 1), or when *n* is greater than *j, b*(*n*) is less than or equal to *b(n* - 1); and the sixth feature is: when *n* is less than *j, b(n)* is greater than *b*(*n* + 1), or when *n* is greater than *j, b*(*n*) is greater than or equal to *b*(*n* - 1); and
*i* is a positive integer greater than 1 and less than M, and *j* is a positive integer greater than 1 and less than N.

38. The apparatus according to claim 37, wherein
the transceiver module is further configured to receive first information, wherein the first information indicates [*a*(*m*)] and/or [*b*(*n*)]; and
the processing module is further configured to determine [*a*(*m*)] and/or [*b*(*n*)] based on the first information.

39. The apparatus according to claim 37, wherein the transceiver module is further configured to:
send first information, wherein the first information indicates [*a*(*m*)] and/or [*b*(*n*)].

40. The apparatus according to any one of claims 37 to 39, wherein the first signal is in a first time period, and the transceiver module is further configured to:
receive an echo signal of a second signal, wherein the second signal is in a second time period following the first time period, the second signal is generated based on [*f*(*n*)(*m*)], an element *f*(*n*)(*m*) in [[(*n*)(*m*)] satisfies *e*(*m*) × *g*(*n*)(*m*) or satisfies *e*(*m*) × *q*(*n*) × *g*(*n*)(*m*) *, e(m)* belongs to [*e*(*m*)]*, q*(*n*) belongs to [*q*(*n*)]*, g*(*n*)(*m*) belongs to [*g*(*n*)(*m*)]*,* [*e*(*m*)] comprises M elements, [*q*(*n*)] comprises N elements, and both [*f*(*n*)(*m*)] and [*g*(*n*)(*m*)] comprise *N* × *M* elements, wherein
when processing the echo signal of the first signal, the processing module is specifically configured to:
process the echo signal of the first signal and the echo signal of the second signal, wherein
when the element in [*a*(*m*)] satisfies the third feature, an element in [*e*(*m*)] satisfies: when m is less than *i, e*(m) is less than *e*(*m* + 1), or when *m* is greater than *i, e*(*m*) is less than or equal to *e*(*m* - 1); or when the element in [*a*(*m*)] satisfies the fourth feature, an element in [*e*(*m*)] satisfies: when m is less than i, *e*(*m*) is greater than *e*(*m* + 1), or when m is greater than *i, e*(*m*) is greater than or equal to *e*(*m* - 1).

41. A communication apparatus, comprising a processor and a memory, wherein
the memory is configured to store one or more computer programs or instructions, and the processor is configured to execute the one or more computer programs or instructions stored in the memory, to cause the communication apparatus to perform the method according to any one of claims 1 to 12, or perform the method according to any one of claims 13 to 20.

42. A communication system, comprising a first communication apparatus and/or a second communication apparatus, wherein the first communication apparatus is configured to perform the method according to any one of claims 1 to 12, and the second communication apparatus is configured to perform the method according to any one of claims 13 to 20.

43. A computer-readable storage medium, storing a computer program or instructions, wherein the computer program or the instructions are used to implement the method according to any one of claims 1 to 12 or the method according to any one of claims 13 to 20.

44. A computer program product, wherein the computer program product comprises a computer program, and when the computer program is run on a computer, the computer is caused to perform the method according to any one of claims 1 to 12 or the method according to any one of claims 13 to 20.
